# EUROPEAN PATENT APPLICATION

(11) **EP 4 796 265 A1**
(43) Date of publication of application: **26.08.2026**
(21) Application number: 24927495.2
(22) Date of filing: 27.12.2024
(51) Int. Cl.: B25J 9/00, B25J 13/08

(54) **WEARABLE DEVICE WITH ZERO POINT SETTING FUNCTION AND OPERATION METHOD THEREOF**

(30) Priority: 29.02.2024 KR 20240030130; 03.05.2024 KR 20240059334
(71) Applicant: Samsung Electronics Co., Ltd., Suwon-si, Gyeonggi-do 16677 (KR)
(72) Inventor: LEE, Hyukjoon, Suwon-si, Gyeonggi-do 16677 (KR); SONG, Sukhoon, Suwon-si, Gyeonggi-do 16677 (KR); KIM, Sungcheol, Suwon-si, Gyeonggi-do 16677 (KR); LEE, Kiwan, Suwon-si, Gyeonggi-do 16677 (KR)
(74) Representative: Gulde & Partner
(86) International application number: PCT/KR2024/021239
(87) International publication number: WO 2025/183323

(57) **Abstract**

Provided are a wearable device including a zero point setting function, and an operating method of the wearable device, wherein the wearable device may be a walking assistance device for aiding exercise of a user, and may include a driving module which generates a torque applied to the body of a user, a torque transfer frame configured to transfer the torque to a leg of the user, an angle sensor configured to measure an angle of the torque transfer frame, and one or more processors configured to set a zero point of the angle sensor on the basis of the measured angle of the torque transfer frame. The one or more processors may individually or collectively determine whether the user is walking, on the basis of the angle of the torque transfer frame, measured by the angle sensor, collect, in response to determining that the user is walking, the angle of the torque transfer frame at a time point when the angle speed of the torque transfer frame satisfies a set condition, determine a zero offset value for setting a zero point, on the basis of the angle of the torque transfer frame collected at each time point when the condition is satisfied, and set the zero point of the angle sensor by using the determined zero offset value.

## Description

### BACKGROUND

### 1. Field

Certain example embodiments relate to a wearable device with a zero point setting function and/or an operation method of the wearable device.

### 2. Description of Related Art

In general, a walking assistance device refers to a mechanism or device that helps a patient, such as a patient who cannot walk on his own due to various diseases, accidents, and the like, or a patient who desires to exercise, to perform walking exercises for rehabilitation treatment, or the like, and/or a mechanism or device that can be used for such exercises. With the recent intensifying aging societies, a growing number of people experience inconvenience in walking or have difficulty in normal walking due to malfunctioning joint issues, and there is increasing interest in walking assistance devices. A walking assistance device is mounted on the body of a user, for example, to assist the user with walking by providing a necessary muscular strength and to induce the user to walk in a normal walking pattern. The walking assistance device may also assist the user with various leg exercises (e.g., power walking, jogging, stair climbing, lunging, and stretching).

### SUMMARY

According to an example embodiment, a wearable device with a zero point setting function may include a driving module, comprising a motor and/or circuitry, configured to generate torque to be applied to a body of a user, a torque transmission frame configured to transmit the generated torque to a leg of the user, a thigh fastening portion connected, directly or indirectly, to the torque transmission frame and configured to fasten the torque transmission frame to the leg of the user, an angle sensor configured to measure an angle of the torque transmission frame, and one or more processors, comprising processing circuitry, configured to perform zero point setting of the angle sensor based on the measured angle of the torque transmission frame. The angle sensor may or may not be part of the driving module in various example embodiments.

According to an example embodiment, the one or more processors may determine whether the user is in a walking state, based on the angle of the torque transmission frame measured by the angle sensor. The one or more processors may collect the angle of the torque transmission frame at a point in time when an angular velocity of the torque transmission frame satisfies a set condition, in response to a determination that the user is in a walking state. The one or more processors may determine a zero point offset value for zero point setting based on angles of the torque transmission frame collected at points in time when the condition is satisfied. The one or more processors may perform zero point setting of the angle sensor using the determined zero point offset value.

According to an example embodiment, the wearable device may further include a position detection sensor configured to output a state value according to a position of the torque transmission frame.

According to an example embodiment, the one or more processors may collect angles of the torque transmission frame. The one or more processors may determine whether a change in the state value of the position detection sensor is a change caused by a movement of the torque transmission frame in a first direction or a change caused by a movement of the torque transmission frame in a second direction different from the first direction, based on changes in the collected angles of the torque transmission frame. The one or more processors may select a target angle from among the collected angles of the torque transmission frame, based on a determination of the change in the state value of the position detection sensor. The one or more processors may determine a zero point offset value for zero point setting based on the selected target angle, and perform zero point setting of the angle sensor using the determined zero point offset value.

According to an example embodiment, an operation method of a wearable device including a driving module configured to generate torque to be applied to a body of a user, a torque transmission frame configured to transmit the generated torque to a leg of the user, and an angle sensor configured to measure an angle of the torque transmission frame may include: determining whether a movement of the torque transmission frame is detected, performing zero point setting of the angle sensor using a position detection sensor, when a movement of the torque transmission frame is detected and the position detection sensor configured to output a state value according to a position of the torque transmission frame is present, and performing zero point setting of the angle sensor using an angle of the torque transmission frame measured by the angle sensor, when a movement of the torque transmission frame is detected and the position detection sensor is absent.

According to an example embodiment, a non-transitory computer-readable storage medium may store instructions that, when executed individually and/or collectively by one or more processors, cause the one or more processors to perform the operation method of the wearable device in the present disclosure.

### BRIEF DESCRIPTION OF THE DRAWINGS

The above and other aspects, features, and advantages of certain example embodiments will be more apparent from the following detailed description, taken in conjunction with the accompanying drawings, in which:
FIG. 1 is a diagram illustrating an overview of a wearable device worn on a body of a user according to various example embodiments;
FIG. 2 is a drawing illustrating an exercise assistance system according to various example embodiments;
FIG. 3 is a rear schematic view of a wearable device according to various example embodiments;
FIG. 4 is a left side view of a wearable device according to various example embodiments;
FIG. 5 is a diagram illustrating components of a wearable device according to various example embodiments;
FIG. 6 is a diagram illustrating an interaction between a wearable device and an electronic device according to various example embodiments;
FIG. 7 is a diagram illustrating components of an electronic device according to various example embodiments;
FIG. 8 is a drawing illustrating a position detection sensor according to various example embodiments;
FIG. 9 is a diagram illustrating an overview of zero point setting of a wearable device according to various example embodiments;
FIG. 10 is a flowchart illustrating an operation method of a wearable device with a zero point setting function according to various example embodiments;
FIGS. 11 and 12 are flowcharts illustrating a walking pattern-based zero point setting method according to various example embodiments;
FIG. 13 is a diagram illustrating determining a zero point offset value based on a walking pattern according to various example embodiments;
FIG. 14 is a flowchart illustrating a high-speed zero point setting method using a position detection sensor according to various example embodiments;
FIG. 15 is a flowchart illustrating a method of performing zero point setting with a unidirectional zero point offset value according to various example embodiments;
FIG. 16 is a diagram illustrating determining the direction of a falling edge based on queue data according to various example embodiments;
FIG. 17 is a flowchart illustrating a method of performing zero point setting with a bidirectional zero point offset value according to various example embodiments;
FIG. 18 is a diagram illustrating determining a zero point offset value based on a determination reference value according to various example embodiments; and
FIG. 19 is a flowchart illustrating a high-accuracy zero point setting method using a position detection sensor according to various example embodiments.

### DETAILED DESCRIPTION

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like components, and any repeated description related thereto will be omitted.

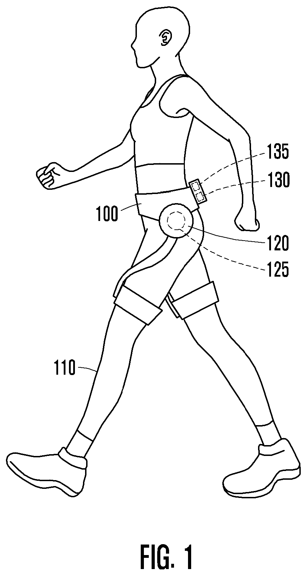

FIG. 1 is a diagram illustrating an overview of a wearable device worn on a body of a user according to various embodiments.

Referring to FIG. 1, in an embodiment, a wearable device 100 may be a device worn on a body of a user 110 to assist the user 110 in walking, exercising, and/or working. The wearable device 100 may be used to measure a physical ability (e.g., a walking ability, an exercise ability, or an exercise posture) of the user 110. In embodiments, the term "wearable device" may be replaced with "wearable robot," "walking assistance device," or "exercise assistance device". The user 110 may be a person who walks, exercises, or performs a task while wearing the wearable device 100.

The wearable device 100 may be worn on a body (e.g., a lower body (the legs, ankles, knees, etc.) and/or an upper body (the torso, arms, wrists, etc.)) of the user 110 to apply an external force such as an assistance force and/or a resistance force to a body motion of the user 110. The assistance force may be a force applied in the same direction as the body motion direction of the user 110, the force to assist a body motion of the user 110. The resistance force may be a force applied in a direction opposite to the body motion direction of the user 110, the force hindering a body motion of the user 110. The term "resistance force" may also be referred to as "exercise load".

In an embodiment, the wearable device 100 may operate in a walking assistance mode for assisting the user 110 in walking. In the walking assistance mode, the wearable device 100 may assist the user 110 in walking by applying an assistance force generated by the driving module 120 of the wearable device 100 to the body of the user 110. The wearable device 100 may allow the user 110 to walk independently or to walk for a long time by providing a force required for walking of the user 110, to expand a walking ability of the user 110. The wearable device 100 may help improve the walking of a user having an abnormal walking habit or gait posture.

In an embodiment, the wearable device 100 may operate in an exercise assistance mode for enhancing the effect of exercise of the user 110 or providing various exercise experiences to the user 110. The exercise assistance mode may include a resistance mode and an assistance mode. The resistance mode of the exercise assistance mode may be a mode for hindering a body motion of the user 110 or providing resistance to a body motion of the user 110 by applying a resistance force generated by the driving module 120 to the body of the user 110. When the wearable device 100 is a hip-type wearable device that is worn on the waist (or pelvis) and legs (e.g., thighs) of the user 110, the wearable device 100 may provide an exercise load to a leg motion of the user 110 while being worn on the legs in the resistance mode, thereby enhancing the effect of exercise on the legs of the user 110. The assistance mode of the exercise assistance mode may be a mode for applying an assistance force to assist with a body motion of the user 110 to the body of the user 110. In the assistance mode, an assistance force in the same direction as a body motion may be provided to the user 110. For example, when a person with a disability or an elderly person wears the wearable device 100 to exercise, the wearable device 100 may provide an assistance force to assist a body motion. In the assistance mode, the wearable device 100 may provide a force in the same direction as a direction of a leg motion of the user 110, and the user 110 may exercise with a small force through the force provided by the wearable device 100. In an exercise program performed using the wearable device 100, the resistance mode and the assistance mode may be combined and operated. For example, the wearable device 100 may provide an assistance force and a resistance force in combination for each exercise session or time interval in such a manner of providing an assistance force in one exercise session and providing a resistance force in another exercise session. In the exercise assistance mode, various exercise programs may be operated depending on the exercise purpose or a physical ability of the user 110. The exercise program may be exercise content that the user 110 performs using the wearable device 100 and may include, for example, cardio exercises, strength training, posture balancing, or any combination thereof. The types of exercise programs are not limited thereto and may vary. The resistance mode and the assistance mode may be alternately activated appropriately depending on an exercise program performed by the wearable device 100, and a target exercise speed that is suitable to an appropriate physical condition (e.g., a heart rate) of the user 110 may be guided to the user during the exercise of the user 110.

In an embodiment, the wearable device 100 may operate in a physical ability measurement mode for measuring a physical ability of the user 110. The wearable device 100 may measure motion information of the user 110 using sensors (e.g., an angle sensor 125 and an inertial measurement unit (IMU) 135) provided in the wearable device 100 during the walking and/or exercise of the user 110 and may assess the physical ability of the user 110 based on the measured motion information. For example, a walking index (e.g., the number of steps, the total walking distance, or a stride length) or an exercise ability indicator (e.g., muscular strength, exercise endurance, or posture balance) of the user 110 may be estimated through the motion information of the user 110 measured by the wearable device 100.

In some embodiments, the description is provided based on an example of the hip-type wearable device 100 as shown in FIG. 1. However, the embodiments are not limited thereto. As described above, the wearable device 100 may also be worn on other body parts (e.g., the upper arms, lower arms, hands, calves, or feet) other than the waist and thighs. The shape and configuration of the wearable device 100 may vary depending on the body part on which the wearable device 100 is worn.

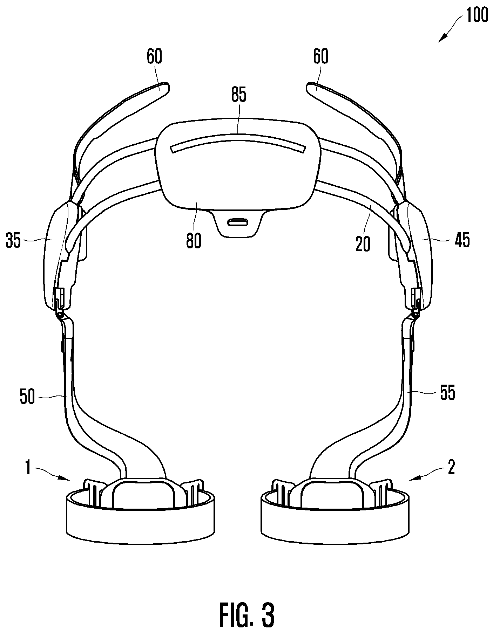

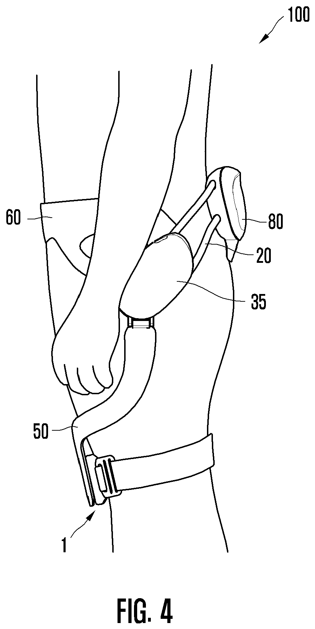

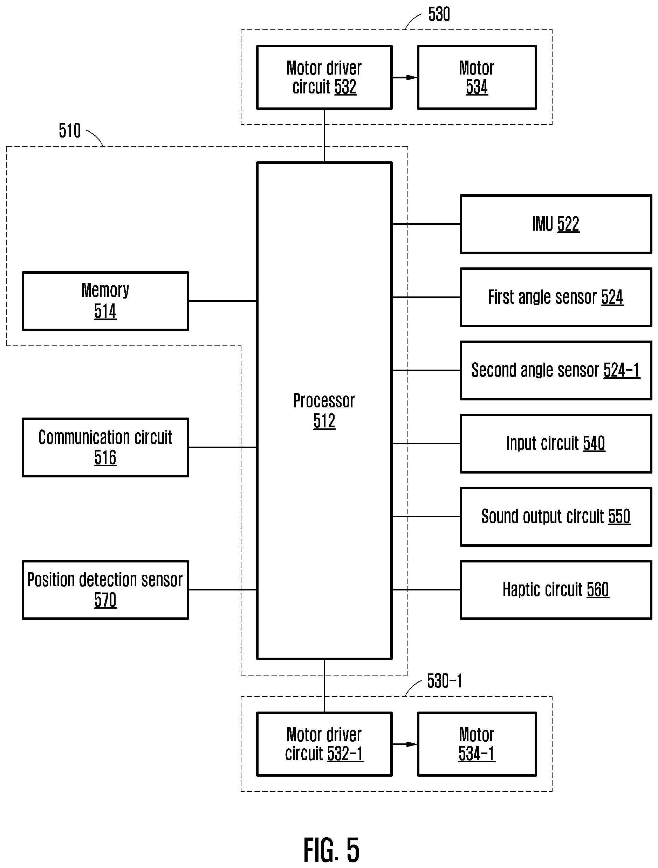

The wearable device 100 may include a support frame (e.g., a waist support frame 20 of FIGS. 3 and 4) configured to support the body of the user 110 when the wearable device 100 is worn on the body of the user 110, the driving module 120 (e.g., a first driving module 45 and a second driving module 35 of FIG. 3) configured to generate torque to be applied to the legs of the user 110, a torque transmission frame (e.g., a first torque transmission frame 55 and a second torque transmission frame 50 of FIG. 3) configured to transmit the torque generated by the driving module 120 to the legs of the user 110, a sensor circuit including one or more sensors configured to obtain sensor data including motion information about a body motion (e.g., a leg motion and an upper body motion) of the user 110, and a control circuit 130 (e.g., a control circuit 510 of FIG. 5) configured to control an operation of the wearable device 100.

In an embodiment, the wearable device 100 may include the angle sensor 125 and the IMU 135. The angle sensor 125 may measure a rotation angle of the torque transmission frame of the wearable device 100 corresponding to a hip joint angle of the user 110. The angle sensor 125 may include, for example, an encoder and/or a Hall sensor. In an embodiment, the angle sensor 125 may be disposed adjacent to a position where a motor included in the driving module 120 is connected, directly or indirectly, to the torque transmission frame. The IMU 135 may include an acceleration sensor and/or an angular velocity sensor, and may measure a change in acceleration and/or angular velocity according to a motion of the user 110. The IMU 135 may measure, for example, a motion value of a waist support frame (e.g., the waist support frame 20 of FIG. 3) or a base body (e.g., a base body 80 of FIG. 3) of the wearable device 100. The motion value of the waist support frame or the base body measured by the IMU 135 may correspond to a waist motion value (or an upper body motion value) of the user 110.

In an embodiment, the control circuit 130 and the IMU 135 may be disposed in the base body (e.g., the base body 80 of FIG. 3) of the wearable device 100. The base body may be on the waist of the user 110 when the user 110 wears the wearable device 100. The base body may be formed on or attached to the outside of the waist support frame of the wearable device 100. The base body may support the lumbar region of the user 110.

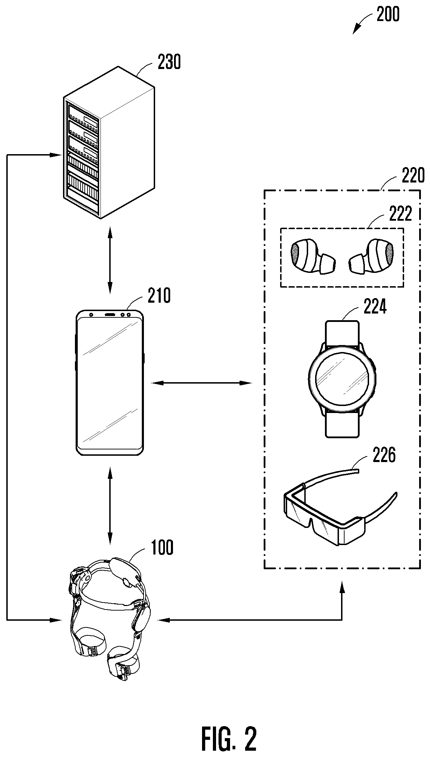

FIG. 2 is a drawing illustrating an exercise assistance system according to various embodiments.

Referring to FIG. 2, an exercise assistance system 200 may include the wearable device 100, an electronic device 210, another wearable device 220, and a server 230. At least one (e.g., the electronic device 210, the other wearable device 220, or the server 230) of the devices excluding the wearable device 100 may be omitted from the exercise assistance system 200, or at least one device (e.g., a dedicated controller for the wearable device 100) may be added to the exercise assistance system 200.

In an embodiment, the wearable device 100 may be worn on a body of a user to assist a motion of the user in a walking assistance mode. For example, the wearable device 100 may be worn on the legs of the user to help the user in walking by generating an assistance force for assisting a leg motion of the user.

In an embodiment, the wearable device 100 may generate a resistance force for hindering a body motion of the user and/or an assistance force for assisting a body motion of the user and apply the generated resistance force and/or assistance force to the body of the user to enhance the effect of exercise of the user in the exercise assistance mode. In the exercise assistance mode, the user may select an exercise program (e.g., cardio exercises such as power walking and outdoor walking, strength training such as squats, split lunges, dumbbell squats, and lunge and knee ups, a stretching exercise, a posture balancing exercise, or any combination thereof) that the user desires to conduct using the wearable device 100 through the electronic device 210 and/or an exercise intensity applied to the exercise program. The wearable device 100 may control a driving module (e.g., the driving module 120 of FIG. 1) of the wearable device 100 based on the exercise program and/or exercise intensity selected by the user. The wearable device 100 may adjust the strength of the resistance force and/or the assistance force generated by the driving module based on the exercise intensity selected by the user. The wearable device 100 may control the driving module to generate a resistance force corresponding to the exercise intensity selected by the user. As the exercise intensity increases, the strength of the resistance force applied to the user may increase.

The wearable device 100 may transmit sensor data measured by a sensor (e.g., the angle sensor 125 or the IMU 135 of FIG.1) to the electronic device 210, and receive a control signal to control an operation of the wearable device 100 from the electronic device 210.

The electronic device 210 may communicate with the wearable device 100 through wireless communication (e.g., Bluetooth communication) or wired communication, remotely control the wearable device 100, or provide state information about a state (e.g., a booting state, a charging state, an exercise program operation state, or an error state) of the wearable device 100 to the user. The electronic device 210 may recommend an exercise program conducted using the wearable device 100 to the user, and analyze an exercise performed by the user. The electronic device 210 may receive sensor data obtained by the sensor of the wearable device 100 from the wearable device 100, and estimate a current exercise state, an exercise result, an exercise posture, and/or a physical ability of the user based on the received sensor data. The electronic device 210 may provide the user with the estimated current exercise state, exercise result, exercise posture, and/or physical ability of the user through a graphical user interface (GUI).

In an embodiment, the user may execute a program (e.g., an application) on the electronic device 210 to control the wearable device 100, and adjust an operation or a setting value (e.g., the magnitude of torque output from a motor of a driving module, the volume of audio output from a sound output circuit (e.g., a sound output circuit 550 of FIG. 5, or the brightness of a lighting unit (e.g., a lighting unit 85 of FIG. 3) of the wearable device 100 through the corresponding program. The program executed by the electronic device 210 may provide a GUI for an interaction with the user. The electronic device 210 may be a device in various forms. For example, the electronic device 210 may include a portable communication device (e.g., a smartphone), a computer device, a portable multimedia device, or a home appliance (e.g., a television, an audio device, or a projector device), but is not limited thereto.

According to an embodiment, the electronic device 210 may be connected to the server 230 using short-range wireless communication or cellular communication. The server 230 may receive user profile information of the user who uses the wearable device 100 from the electronic device 210, and store and manage the received user profile information. The user profile information may include, for example, information about at least one of the name, age, gender, height, weight, medical history, or body mass index (BMI). The server 230 may receive exercise history information about an exercise performed by the user from the electronic device 210, and store and manage the received exercise history information. The server 230 may provide the electronic device 210 with various exercise programs or physical ability measurement programs to be provided to the user. In an embodiment, the server 230 may be connected to the wearable device 100. The server 230 may receive, from the wearable device 100, the sensor data measured by the wearable device 100 and transmit, to the wearable device 100, a control signal for controlling an operation of the wearable device 100 and/or data related to the exercise program. In an embodiment, the server 230 may be a cloud server.

According to an embodiment, the wearable device 100 and/or the electronic device 210 may be connected to the other wearable device 220. Exercise result information, physical ability information, and/or exercise posture assessment information of the user that are determined by the electronic device 210 may be transmitted to the other wearable device 220 and provided to the user through the other wearable device 220. State information of the wearable device 100 may also be transmitted to the other wearable device 220 and provided to the user through the other wearable device 220. In an embodiment, the wearable device 100, the electronic device 210, and the other wearable device 220 may be connected to each other through wireless communication (e.g., Bluetooth communication or Wi-Fi communication). The other wearable device 220 may be, for example, wireless earphones 222, a smartwatch (or a watch-type wearable device) 224, or smartglasses (a wearable device in the type of glasses or goggles) 226, but is not limited thereto.

In an embodiment, the wireless earphones 222 may be wirelessly connected to the electronic device 210 and/or the wearable device 100 and may output a guiding voice, music, and/or sound effect related to the exercise program. The wireless earphones 222 may provide information related to the exercise program (e.g., introduction of the exercise program or a remaining exercise time) to the user or inquire about a selection of the user through the guiding voice. The wireless earphones 222 may include a microphone, and the microphone may receive a voice input from the user. The voice input received through the microphone may be transmitted to the electronic device 210, and voice recognition for the voice input may be performed by the electronic device 210.

In an embodiment, the smartwatch 224 may include a biometric sensor (e.g., a heart rate sensor or an electromyography sensor) configured to measure a biosignal, including heart rate information of the user, and transmit the biosignal measured by the biometric sensor to the electronic device 210 and/or the wearable device 100. For example, the electronic device 210 may estimate the heart rate information (e.g., the current heart rate, the maximum heart rate, and the average heart rate) and/or electromyography information of the user based on the biosignal received from the smartwatch 224, and provide the user with the estimated heart rate information and/or electromyography information. The heart rate information and/or the electromyography information may be used to determine the haptic intensity of haptic feedback provided through the wearable device 100.

In an embodiment, the smartwatch 224 may include an IMU configured to measure motion information of the user and/or a position sensor configured to measure position information of the user, and transmit the motion information and/or position information of the user to the electronic device 210 and/or the wearable device 100. The smartwatch 224 may include a communication circuit (e.g., a short-range communication circuit) for communicating with another device (e.g., the electronic device 210 or the wearable device 100). In an embodiment, the smartwatch 224 may provide an interface related to an exercise program through a display. The interface related to the exercise program may be implemented through a separate application installed on the smartwatch 224. The user may also control the wearable device 100 through the smartwatch 224.

In an embodiment, the smartglasses 226 may provide information to the user through a display in the form of glasses. For example, the smartglasses 226 may output information about the current exercise speed, a target exercise speed, the currently achieved exercise amount, the exercise time, and the biometric information, through the display in an exercise mode. In addition, the smartglasses 226 may output a screen for guiding an exercise path to the user.

FIG. 3 is a rear schematic view of a wearable device according to various embodiments. FIG. 4 is a left side view of the wearable device according to various embodiments.

Referring to FIGS. 3 and 4, the wearable device 100 according to an embodiment may include the base body 80, the waist support frame 20, the driving modules 35 and 45, the torque transmission frames 50 and 55, thigh fastening portions 1 and 2, and a waist fastening portion 60. The base body 80 may include a lighting unit 85. In an embodiment, at least one (e.g., the lighting unit 85) of the components described above may be omitted from the wearable device 100, or one or more other components may be added to the wearable device 100.

The base body 80 may be positioned on the lumbar region or abdomen of a user when the user wears the wearable device 100. In an embodiment, the base body 80 may be worn on the lumbar region of the user to provide cushioning to the waist of the user and support the waist of the user. The base body 80 may be hung on the hip part (an area of the hips) of the user to prevent or reduce chances of the wearable device 100 from being separated downward due to gravity while the user is wearing the wearable device 100. The base body 80 may distribute a portion of the weight of the wearable device 100 to the waist of the user while the user is wearing the wearable device 100. The base body 80 may be connected, directly or indirectly, to the waist support frame 20. Waist support frame connecting elements (not shown) to be connected, directly or indirectly, to the waist support frame 20 may be provided at both ends of the base body 80.

In an embodiment, the lighting unit 85 may be provided on the outer surface of the base body 80. The lighting unit 85 may include a light source (e.g., a light-emitting diode (LED)). The lighting unit 85 may emit light in response to a control of a processor (not shown) (e.g., a processor 512 of FIG. 5) of the wearable device 100. In some embodiments, the lighting unit 85 may be controlled to provide (or output) visual feedback corresponding to the state of the wearable device 100 through the lighting unit 85.

In an embodiment, a display (not shown) may be provided on the outer surface of the base body 80. The display may provide a screen for various pieces of visual information related to the wearable device 100 (e.g., state information of the wearable device 100) and a user interface (UI).

The waist support frame 20 may support a body part (e.g., the waist) of the user when the wearable device 100 is worn on the body of the user. The waist support frame 20 may extend from both ends of the base body 80. The lumbar region of the user may be accommodated inside the waist support frame 20. The waist support frame 20 may include at least one rigid body beam. Each beam may be in a curved shape having a preset curvature to enclose the lumbar region of the user. The waist fastening portion 60 may be connected, directly or indirectly, to an end of the waist support frame 20. The first driving module 45 and the second driving module 35 may be directly or indirectly connected to the waist support frame 20.

In an embodiment, a processor, a memory (e.g., a memory 514 of FIG. 5), an IMU (e.g., the IMU 135 of FIG. 1 or an IMU 522 of FIG. 5), a communication circuit (e.g., a communication circuit 516 of FIG. 5), a sound output circuit (e.g., the sound output circuit 550 of FIG. 5), and a battery (not shown) may be disposed in the base body 80. The base body 80 may protect the components disposed therein. The processor may generate a control signal for controlling an operation of the wearable device 100. The processor may control a motor (or an actuator) of each of the first driving module 45 and the second driving module 35 configured to generate torque based on electrical energy stored in the battery.

In an embodiment, the wearable device 100 may include one or more sensors. The wearable device 100 may include one or more sensors configured to obtain sensor data including motion information of the user and/or motion information of the components of the wearable device 100. For example, the one or more sensors may include an IMU (e.g., the IMU 135 of FIG. 1 or the IMU 522 of FIG. 5) configured to measure an upper body motion value of the user or a motion value of the waist support frame 20 and/or an angle sensor (e.g., the angle sensor 125 of FIG. 1 or a first angle sensor 524 and a second angle sensor 524-1 of FIG. 5) configured to measure a hip joint angle of the user or an angle of the torque transmission frame 50 or 55, but are not limited thereto. A hip joint angular velocity of the user or an angular velocity of the torque transmission frame 50 or 55 may be determined by differentiating the hip joint angle of the user or the angle of the torque transmission frame 50 or 55 measured by the angle sensor.

For example, the one or more sensors may further include at least one of a position sensor, a torque sensor, a pressure sensor, a temperature sensor, a biosignal sensor (e.g., a heart rate sensor or an electromyography sensor), a distance sensor, or a proximity sensor.

The waist fastening portion 60 may be connected, directly or indirectly, to the waist support frame 20 to fasten the waist support frame 20 to the waist of the user. The waist fastening portion 60 may include, for example, a pair of belts.

The first driving module 45 and the second driving module 35 may generate an external force (or torque) to be applied to the body of the user based on the control signal generated by the processor. For example, the first driving module 45 and the second driving module 35 may generate an assistance force or a resistance force applied to the legs of the user. In an embodiment, the first driving module 45 may be disposed at a position corresponding to the right hip joint of the user, and the second driving module 35 may be disposed at a position corresponding to the left hip joint of the user. The first driving module 45 may include a first actuator and a first joint member, and the second driving module 35 may include a second actuator and a second joint member. The first actuator may provide power to be transmitted to the first joint member, and the second actuator may provide power to be transmitted to the second joint member. The first actuator and the second actuator may each include a motor configured to generate power (or torque) by receiving power from the battery. When the motor is driven as the power is supplied thereto, the motor may generate a force (an assistance force) for assisting a body motion of the user or a force (a resistance force) for hindering a body motion of the user. In an embodiment, the processor may adjust the strength and direction of the force generated by the motor by adjusting a voltage and/or a current supplied to the motor.

In an embodiment, the first joint member and the second joint member may receive power from the first actuator and the second actuator, respectively, and apply an external force to the body of the user based on the received power. In an embodiment, the first joint member and the second joint member may be disposed at positions corresponding to the joints of the user, respectively. One side of the first joint member may be directly or indirectly connected to the first actuator, and the other side of the first joint member may be directly or indirectly connected to the first torque transmission frame 55. The first joint member may be rotated by the power received from the first actuator. An encoder or a Hall sensor that may operate as an angle sensor to measure a rotation angle (corresponding to a joint angle of the user) of the first joint member or the first torque transmission frame 55 may disposed on one side of the first joint member. One side of the second joint member may be connected, directly or indirectly, to the second actuator, and the other side of the second joint member may be connected, directly or indirectly, to the second torque transmission frame 50. The second joint member may be rotated by the power received from the second actuator. An encoder or a Hall sensor that may operate as an angle sensor to measure a rotation angle of the second joint member or the second torque transmission frame 50 may be disposed on one side of the second joint member.

In an embodiment, the first actuator may be disposed in a lateral direction of the first joint member, and the second actuator may be disposed in a lateral direction of the second joint member. A rotation axis of the first actuator and a rotation axis of the first joint member may be spaced apart from each other, and a rotation axis of the second actuator and a rotation axis of the second joint member may also be spaced apart from each other. However, the embodiments are not limited thereto, and an actuator and a joint member may share a rotation axis. In an embodiment, each actuator may be spaced apart from a corresponding joint member. In this case, the driving module 35 or 45 may further include a power transmission module (not shown) configured to transmit power from the actuator to the joint member. The power transmission module may be a rotary body, such as a gear, or a longitudinal member, such as a wire, a cable, a string, a spring, a belt, or a chain. However, the scope of the embodiment is not limited by the positional relationship between an actuator and a joint member and the power transmission structure described above.

In an embodiment, when the wearable device 100 is worn on the legs of the user, the first torque transmission frame 55 and the second torque transmission frame 50 may transmit torque generated by the first driving module 45 and the second driving module 35 to the body (e.g., the legs) of the user, respectively. The transmitted torque may function as an external force applied to a leg motion of the user. Respective ends of the first torque transmission frame 55 and the second torque transmission frame 50 may be directly or indirectly connected to the joint member and rotate. As the other ends of the first torque transmission frame 55 and the second torque transmission frame 50 are directly or indirectly connected to the first thigh fastening portion 2 and the second thigh fastening portion 1, the first torque transmission frame 55 and the second torque transmission frame 50 may transmit the torque generated by the first driving module 45 and the second driving module 35 to the thighs of the user while supporting the thighs of the user. For example, the first torque transmission frame 55 and the second torque transmission frame 50 may push or pull the thighs of the user. The first torque transmission frame 55 and the second torque transmission frame 50 may extend in a longitudinal direction of the thighs of the user or may be bent and enclose at least some portions of the circumferences of the thighs of the user. The first torque transmission frame 55 may be a torque transmission frame for transmitting torque to the right leg of the user, and the second torque transmission frame 50 may be a torque transmission frame for transmitting torque to the left leg of the user.

The first thigh fastening portion 2 and the second thigh fastening portion 1 may be directly or indirectly connected to the first torque transmission frame 55 and the second torque transmission frame 50, respectively, and fasten the wearable device 100 to the legs (specifically, thighs) of the user. The first thigh fastening portion 2 may be a thigh fastening portion for fastening the wearable device 100 to the right thigh of the user, and the second thigh fastening portion 1 may be a thigh fastening portion for fastening the wearable device 100 to the left thigh of the user.

In an embodiment, the first thigh fastening portion 2 may include a first cover, a first fastening frame, and a first strap, and the second thigh fastening portion 1 may include a second cover, a second fastening frame, and a second strap. The first cover and the second cover may apply torque generated by the first driving module 45 and the second driving module 35 to the thighs of the user, respectively. The first cover and the second cover may be disposed on respective sides of the thighs of the user and push or pull the thighs of the user, respectively. The first cover and the second cover may be disposed in the circumferential directions of the thighs of the user. The first cover and the second cover may extend to both sides from the other ends of the first torque transmission frame 55 and the second torque transmission frame 50, and may include curved surfaces corresponding to the thighs of the user. The respective ends of the first cover and the second cover may be directly or indirectly connected to the first fastening frame and the second fastening frame. The other ends of the first cover and the second cover may be directly or indirectly connected to the first strap and the second strap.

For example, the first fastening frame and the second fastening frame may be disposed to enclose at least some portions of the circumferences of the thighs of the user, thereby the thighs of the user may be prevented from being separated from the wearable device 100 or a possibility of separation may decrease. The first fastening frame may have a fastening structure that connects the first cover to the first strap, and the second fastening frame may have a fastening structure that connects the second cover to the second strap.

The first strap may enclose a remaining portion of the circumference of the right thigh of the user, which is not covered by the first cover and the first fastening frame, and the second strap may enclose a remaining portion of the circumference of the left thigh of the user, which is not covered by the second cover and the second fastening frame. The first strap and the second strap may include, for example, an elastic material (e.g., a band).

FIG. 5 is a diagram illustrating components of a wearable device according to various embodiments.

Referring to FIG. 5, the wearable device 100 may include a control circuit 510, a communication circuit 516, one or more sensors (e.g., an IMU 522, a first angle sensor 524, and a second angle sensor 524-1), driving modules 530 and 530-1, an input circuit 540, a sound output circuit 550 including a speaker, and a haptic circuit 560.

The driving module 530 may include a motor 534 and a motor driver circuit 532 for driving the motor 534, and the driving module 530-1 may include a motor 534-1 and a motor driver circuit 532-1 for driving the motor 534-1. Although the embodiment of FIG. 5 shows two driving modules, this is merely an example, and one driving module or three or more driving modules may be provided. The driving module 530 including the motor driver circuit 532 and the motor 534 may correspond to the first driving module 45 of FIG. 3, and the driving module 530-1 including the motor driver circuit 532-1 and the motor 534-1 may correspond to the second driving module 35 of FIG. 3.

The one or more sensors may include one or more sensors configured to obtain sensor data (or sensed values). The one or more sensors may transmit the obtained sensor data to the control circuit 510. The one or more sensors may include, for example, the IMU 522, the first angle sensor 524, and/or the second angle sensor 524-1. Each of the sensors may be provided in plurality, and a portion of the sensors may be omitted.

The IMU 522 may measure a motion value of the body of the user. The IMU 522 may sense X-axis, Y-axis, and Z-axis accelerations and X-axis, Y-axis, and Z-axis angular velocities according to a motion of the user. The IMU 522 may measure, for example, an upper body motion value of the user. The upper body motion value of the user may correspond to a motion value of a waist support frame (e.g., the waist support frame 20 of FIGS. 3 and 4) of the wearable device 100. In an embodiment, the IMU 522 may be disposed on a printed circuit board (PCB) in the base body 80 of the wearable device 100, and may measure a signal indicating the degree of tilting of the wearable device 100 and/or the acceleration of the wearable device 100.

The first angle sensor 524 and the second angle sensor 524-1 may measure hip joint angles according to the leg motion of the user. The first angle sensor 524 may sense the hip joint angle of the right leg of the user, and the second angle sensor 524-1 may sense the hip joint angle of the left leg of the user. Each of the first angle sensor 524 and the second angle sensor 524-1 may include, for example, an encoder and/or a Hall sensor. The hip joint angle of the right leg sensed by the first angle sensor 524 may correspond to a motion value (e.g., the angle) of a first torque transmission frame (e.g., the first torque transmission frame 55 of FIG. 3) of the wearable device, and the hip joint angle of the left leg sensed by the second angle sensor 524-1 may correspond to a motion value (e.g., the angle) of a second torque transmission frame (e.g., the second torque transmission frame 50 of FIG. 3) of the wearable device.

In an embodiment, the processor 512 may determine the angular velocity of the first torque transmission frame by differentiating a change in the angle over time of the first torque transmission frame sensed by the first angle sensor 524, and determine the angular velocity of the second torque transmission frame by differentiating a change in the angle over time of the second torque transmission frame sensed by the second angle sensor 524-1.

In an embodiment, the one or more sensors may further include a torque sensor configured to sense a torque value, a position sensor configured to obtain a position value of the wearable device 100, a proximity sensor configured to detect the proximity of an object, a biosignal sensor configured to detect a biosignal of a user, a distance sensor configured to measure the distance to an object, a pressure sensor configured to measure a pressure value, and/or a temperature sensor configured to measure ambient temperature.

The input circuit 540 may receive a command or data to be used by a component (e.g., the processor 512) of the wearable device 100 from the outside (e.g., the user) of the wearable device 100. The input circuit 540 may include, for example, a key (e.g., a button) and/or a touch screen.

The sound output circuit 550 may output a sound signal to the outside of the wearable device 100. The sound output circuit 550 may include a speaker that plays a guide sound signal (e.g., a driving start sound or an operation error notification sound), music content, or a guiding voice.

In an embodiment, the wearable device 100 may further include a battery (not shown) configured to supply power to each component of the wearable device 100 and a power management circuit (not shown) configured to control the power supply. The wearable device 100 may convert the power of the battery into power suitable for an operating voltage of each component of the wearable device 100 and supply the converted power to each component.

The driving modules 530 and 530-1 may generate external force to be applied to the legs of the user under the control of the control circuit 510. The driving modules 530 and 530-1 may be disposed in positions corresponding to the positions of the hip joints of the user, and may generate torque to be applied to the legs of the user based on a control signal generated by the control circuit 510. The control circuit 510 may transmit the control signal to the motor driver circuits 532 and 532-1, and the motor driver circuits 532 and 532-1 may control the operation of the motors 534 and 534-1 by generating a current signal (or a voltage signal) corresponding to the control signal and supplying the current signal (or the voltage signal) to the motors 534 and 534-1. The current signal may not be supplied to the motors 534 and 534-1 according to the control signal. When the motors 534 and 534-1 are driven as the current signal is supplied to the motors 534 and 534-1, the motors 534 and 534-1 may generate assistance forces for assisting leg motions of the user or resistance forces for hindering leg motions of the user.

The control circuit 510 may control the overall operation of the wearable device 100, and generate a control signal to control each component of the wearable device 100. The control circuit 510 may include the processor 512 and the memory 514.

The processor 512 may execute, for example, software to control at least one other component (e.g., a hardware or software component) of the wearable device directly or indirectly connected to the processor 512, and perform a variety of data processing or computation. According to an embodiment, as at least part of data processing or computation, the processor 512 may store instructions or data received from another component (e.g., the communication circuit 516) in the memory 514, process the instructions or data stored in the memory 514, and store result data obtained as a result of processing in the memory 514. The processor 512 may include one or more processors, and the operations of the wearable device 100 described herein may be performed by one processor or by a combination of multiple processors, individually and/or collectively.

According to an embodiment, the processor 512 may include a main processor (e.g., a central processing unit (CPU) or an application processor (AP)) or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. The processor 512 may be implemented as a system on chip (SoC) or an integrated circuit (IC) configured to perform processing. The auxiliary processor may be implemented separately from the main processor or as part of the main processor. Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The memory 514 may store a variety of data used by at least one component (e.g., the processor 512) of the control circuit 510. The data may include, for example, software, sensor data, and input data or output data for instructions related thereto. The memory 514 may include at least one instruction executable by the processor 512. The memory 514 may include one or more memories, and the instructions controlled by the processor 512 to perform the operations of the wearable device 100 described herein may be stored in one memory or divided and stored in multiple memories. The memory 514 may include a volatile memory or a non-volatile memory.

The communication circuit 516 may support establishing a direct (e.g., wired) communication channel or a wireless communication channel between the control circuit 510 and another component of the wearable device 100 or an external electronic device (e.g., the electronic device 210 or the other wearable device 220 of FIG. 2) and performing communication via the established communication channel. For example, the communication circuit 516 may transmit the sensor data obtained by the sensor to an external electronic device (e.g., the electronic device 210 of FIG. 2) and receive a control signal from the external electronic device. According to an embodiment, the communication circuit 516 may include one or more CPs that operate independently of the processor 512 and support direct (e.g., wired) communication or wireless communication. According to an embodiment, the communication circuit 516 may include a wireless communication circuit (e.g., a cellular communication circuit, a short-range wireless communication circuit, or a global navigation satellite system (GNSS) communication circuit), and/or a wired communication circuit. The wireless communication circuit may communicate with another component of the wearable device 100 and/or an external device via, for example, Bluetooth^{™}, wireless fidelity (Wi-Fi), advanced and adaptive network technology (ANT), infrared data association (IrDA), a legacy cellular network, a 5G network, a next-generation network, the Internet, or a computer network (e.g., a local area network (LAN) or a wide area network (WAN)).

The haptic circuit 560 may provide haptic feedback to the user under the control of the processor 512. The haptic circuit 560 may include one or a plurality of haptic actuators. The haptic actuator may include, for example, a piezo actuator, a bander type actuator, and/or a vibration motor-based actuator. One or a plurality of haptic actuators may be provided. In an embodiment, the haptic actuator may be disposed in at least one of a base body (e.g., the base body 80 of FIG. 3), a torque transmission frame (e.g., the first torque transmission frame 55 or the second torque transmission frame 50 of FIG. 3), and a thigh fastening portion (e.g., the first thigh fastening portion 2 or the second thigh fastening portion 1 of FIG. 3) of the wearable device 100.

A position detection sensor 570 may output a state value according to the position of the torque transmission frame. The position detection sensor 570 may be a Hall sensor configured to detect a position using the Hall effect. The position detection sensor 570 may output a first state value when the torque transmission frame is positioned in a detection area (e.g., an area between -12 degrees and +12 degrees with respect to a reference axis), and output a second state value different from the first state value when the torque transmission frame is positioned in a non-detection area. For example, the first state value may be a high level value (e.g., "1"), and the second state value may be a low level value (e.g., "0"). The position detection sensor 570 may include a first position detection sensor configured to output a state value according to the position of the first torque transmission frame and a second position detection sensor configured to output a state value according to the position of the second torque transmission frame. The first position detection sensor may be disposed in the vicinity of the position where the first torque transmission frame and the motor 534 that moves the first torque transmission frame are coupled, and the second position detection sensor may be disposed in the vicinity of the position where the second torque transmission frame and the motor 534-1 that moves the second torque transmission frame are coupled.

In an embodiment, one or more processors 512 may determine whether a motion of a torque transmission frame (e.g., the first torque transmission frame 55 or the second torque transmission frame 50 of FIG. 3) of the wearable device 100 is detected. When a motion of the torque transmission frame is detected and the position detection sensor 570 configured to output a state value according to the position of the torque transmission frame 55 or 50 is present, the one or more processors 512 may perform zero point setting of an angle sensor (e.g., the first angle sensor 524 or the second angle sensor 524-1) using the position detection sensor 570.

### <Zero Point Setting Using Position Detection Sensor 570>

In an embodiment, the wearable device 100 having a zero point setting function using the position detection sensor 570 may include a driving module 530 or 530-1 configured to generate torque to be applied to the body of a user, a torque transmission frame (e.g., the first torque transmission frame 55 or the second torque transmission frame 50 of FIG. 3) configured to transmit the generated torque to a leg of the user, a thigh fastening portion (e.g., the first thigh fastening portion 2 or the second thigh fastening portions 1 of FIG. 3) connected to the torque transmission frame and configured to fasten the torque transmission frame to the leg of the user, an angle sensor (e.g., the first angle sensor 524 or the second angle sensor 524-1) configured to measure the angle of the torque transmission frame (corresponding to the rotation angle of the motor of the wearable device 100), a position detection sensor 570 configured to output a state values according to the position of the torque transmission frame, and one or more processors 512 configured to perform zero point setting of the angle sensor based on the measured angle of the torque transmission frame.

In an embodiment, the one or more processors 512 may collect angles of the torque transmission frame. The one or more processors 512 may sequentially store the collected angles of the torque transmission frame in queue data. The angles of the torque transmission frame may be stored sequentially in queue data having a first-in first-out (FIFO) structure. The one or more processors 512 may determine whether a change in the state value of the position detection sensor 570 is a change caused by a movement in a first direction or a change caused by a movement in a second direction, based on changes in the angles stored in the queue data.

In an embodiment, the one or more processors 512 may determine whether a change in the state value of the position detection sensor 570 is a change caused by a movement of the torque transmission frame in the first direction (e.g., the direction in which the user is walking, a forward direction, or a flexion direction) or a change caused by a movement in the second direction (e.g., the direction opposite to the direction in which the user is walking, a backward direction, or an extension direction) different from the first direction, based on changes in the angles of the torque transmission frame collected in a time interval. The one or more processors 512 may control the angle of the torque transmission frame to be stored in queue data corresponding to the first direction or queue data corresponding to the second direction. The one or more processors 512 may determine a determination reference value based on the queue data corresponding to the first direction and the queue data corresponding to the second direction, and determine whether the change in the state value of the position detection sensor 570 is a change caused by the movement in the first direction or a change caused by the movement in the second direction, based on the determination reference value.

The one or more processors 512 may select a target angle from among the collected angles of the torque transmission frame, based on a determination of the change in the state value of the position detection sensor 570. The one or more processors 512 may determine a zero point offset value for zero point setting based on the selected target angle.

In an embodiment, the one or more processors 512 may perform zero point setting with a unidirectional zero point offset value. In response to a determination that the change in the state value of the position detection sensor 570 is caused by the movement of the torque transmission frame in the first direction, the one or more processors 512 may select the greatest value of the collected angles of the torque transmission frame 50 or 55 as the target angle, and determine a result value obtained by applying a reference angle (e.g., +12 degrees) corresponding to the first direction to the target angle to be the zero point offset value. In response to a determination that the change in the state value of the position detection sensor 570 is caused by the movement of the torque transmission frame in the second direction, the one or more processors 512 may select the smallest value of the collected angles of the torque transmission frame 50 or 55 as the target angle, and determine a result value obtained by applying a reference angle (e.g., -12 degrees) corresponding to the second direction to the target angle to be the zero point offset value.

In an embodiment, the one or more processors 512 may perform zero point setting with a bidirectional zero point offset value. The one or more processors 512 may select the greatest value of the angles included in the queue data corresponding to the first direction as a first target angle, and select the smallest value of the angles included in the queue data corresponding to the second direction as a second target angle. The one or more processors 512 may determine the zero point offset value based on the first target angle and the second target angle.

The one or more processors 512 may perform zero point setting of the first angle sensor 524 and/or the second angle sensor 524-1 using the determined zero point offset value. The one or more processors 512 may adjust the output angle of the angle sensor by applying the determined zero point offset value to the angle measured and output by the angle sensor. For example, the one or more processors 512 may obtain a zero point-adjusted angle value by adding (or subtracting) the zero point offset value to (or from) the angle output from the angle sensor. The torque to be output through the driving module 530 and/or the driving module 530-1 may be determined based on the zero point-adjusted angle value.

When a movement of the torque transmission frame is detected and the position detection sensor 570 is absent (or the position detection sensor 570 is disabled or broken), the one or more processors 512 may perform walking pattern-based zero point setting using the angle of the torque transmission frame measured by an angle sensor (e.g., the first angle sensor 524 or the second angle sensor 524-1).

### <Zero Point Setting Based On Walking Pattern>

In an embodiment, the wearable device 100 having a walking pattern-based zero point setting function may include a driving module 530 or 530-1 configured to generate torque to be applied to the body of a user, a torque transmission frame (e.g., the first torque transmission frame 55 or the second torque transmission frame 50 of FIG. 3) configured to transmit the generated torque to a leg of the user, a thigh fastening portion (e.g., the first thigh fastening portion 2 or the second thigh fastening portions 1 of FIG. 3) connected to the torque transmission frame and configured to fasten the torque transmission frame to the leg of the user, an angle sensor (e.g., the first angle sensor 524 or the second angle sensor 524-1) configured to measure the angle of the torque transmission frame, and one or more processors 512 configured to perform zero point setting of the angle sensor based on the measured angle of the torque transmission frame. The one or more processors 512 may automatically perform zero point setting based on the angle of the torque transmission frame collected while performing an exercise program of the wearable device 100, without performing user guiding for zero point setting.

In an embodiment, the one or more processors 512 may determine whether the user is in a walking state, based on the angle of the torque transmission frame measured by the angle sensor. The torque transmission frame may include a first torque transmission frame (e.g., the first torque transmission frame 55 of FIG. 3) and a second torque transmission frame (e.g., the second torque transmission frame 50 of FIG. 3) for transferring torque to different legs of the user. The one or more processors 512 may determine whether the user is in a walking state based on the angular velocity of the first torque transmission frame and the angular velocity of the second torque transmission frame.

In an embodiment, the one or more processors 512 may determine whether the angular velocity of the first torque transmission frame is less than or equal to a first threshold value, and determine whether the angular velocity of the first torque transmission frame 55 is greater than or equal to a second threshold value, after determining that the angular velocity of the first torque transmission frame 55 is less than or equal to the first threshold value. The one or more processors 512 may determine that the user is in a walking state, if the angular velocity of the second torque transmission frame when the angular velocity of the first torque transmission frame is at a minimum or low value within one cycle is less than or equal to a third threshold value, after determining that the angular velocity of the first torque transmission frame 55 is greater than or equal to the second threshold value.

In response to a determination that the user is in a walking state, the one or more processors 512 may collect the angle of the torque transmission frame at a point in time when the angular velocity of the torque transmission frame satisfies a set condition. The one or more processors 512 may determine that the angular velocity of the torque transmission frame 50 or 55 satisfies the condition when the angular velocity of the torque transmission frame is at a minimum or low value within one cycle. The one or more processors 512 may determine a zero point offset value for zero point setting based on the angles of the torque transmission frame collected at points in time when the condition is satisfied.

In an embodiment, the one or more processors 512 may determine whether the number of angles of the torque transmission frame collected at points in time when the condition is satisfied is greater than or equal to a fourth threshold value. In response to a determination that the number of collected angles of the torque transmission frame 50 or 55 is greater than or equal to the fourth threshold value, the one or more processors 512 may determine whether a deviation between the collected angles of the torque transmission frame is less than or equal to a fifth threshold value. In response to a determination that the deviation is less than or equal to the fifth threshold value, the one or more processors 512 may determine the zero point offset value based on the collected angles of the torque transmission frame. For example, the one or more processors 512 may determine the zero point offset value based on an average value of the collected angles of the torque transmission frame 50 or 55.

The one or more processors 512 may perform zero point setting of the angle sensor using the determined zero point offset value. The one or more processors 512 may adjust the output angle of the angle sensor by applying the determined zero point offset value to the angle measured and output by the angle sensor. For example, the one or more processors 512 may obtain a zero point-adjusted angle value by adding (or subtracting) the zero point offset value to (or from) the angle output from the angle sensor. The torque to be output through the driving module 530 and/or the driving module 530-1 may be determined based on the zero point-adjusted angle value.

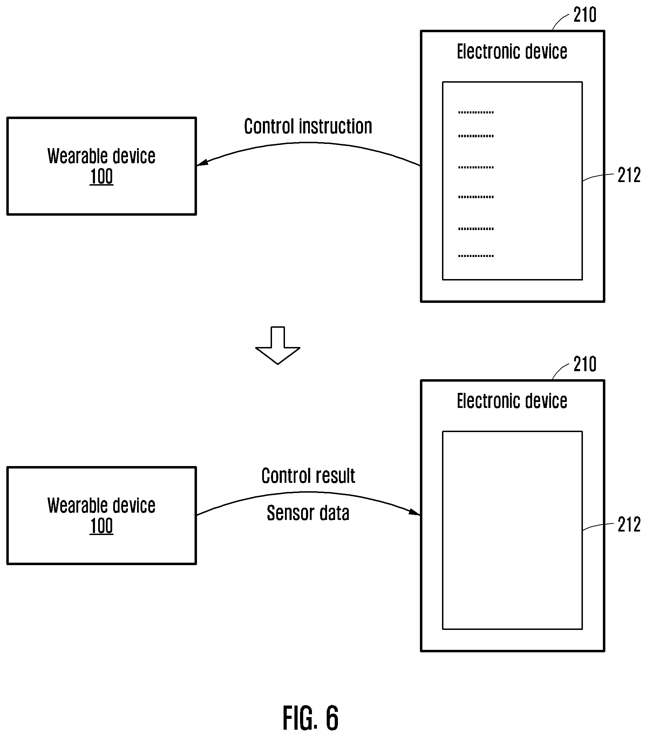

FIG. 6 is a diagram illustrating an interaction between a wearable device and an electronic device according to various embodiments.

Referring to FIG. 6, the wearable device 100 may communicate with the electronic device 210. For example, the electronic device 210 may be a user terminal of a user who uses the wearable device 100. According to an embodiment, the wearable device 100 and the electronic device 210 may be connected to each other through short-range wireless communication (e.g., Bluetooth^{™} or Wi-Fi communication).

In an embodiment, the electronic device 210 may check a state of the wearable device 100 or execute an application to control or operate the wearable device 100. A screen of a user interface (UI) may be displayed to control an operation of the wearable device 100 or determine an operation mode of the wearable device 100 on a display 212 of the electronic device 210 through the execution of the application. The UI may be, for example, a graphical user interface (GUI).

In an embodiment, the user may input an instruction for controlling the operation of the wearable device 100 (e.g., an execution instruction to a walking assistance mode or an exercise assistance mode) or change settings of the wearable device 100 through a GUI screen on the display 212 of the electronic device 210. Further, the user may set exercise goals and change a torque parameter to be applied to the wearable device 100 through the GUI screen. The torque parameter may include, for example, a first parameter to control the magnitude of torque generated by a motor (e.g., the motor 534 or the motor 534-1 of FIG. 5) of the wearable device 100 and/or a second parameter to control a point in time when the torque is applied. In various embodiments of the present disclosure, the term "torque parameter" may be replaced with the term "parameter", "robot parameter", or "control parameter".

The electronic device 210 may generate a control instruction (or control signal) corresponding to an operation control instruction or a setting change instruction input by the user and transmit the generated control instruction to the wearable device 100. In an embodiment, the torque parameter set by the user may be included in the control instruction. The wearable device 100 may operate according to the received control instruction and transmit a control result according to the control instruction and/or sensor data measured by the sensor module of the wearable device 100 to the electronic device 210. The electronic device 210 may provide the user with result information (e.g., current exercise state information, exercise result information, exercise posture assessment information, and physical ability assessment information) derived by analyzing the control result and/or the sensor data through the GUI screen.

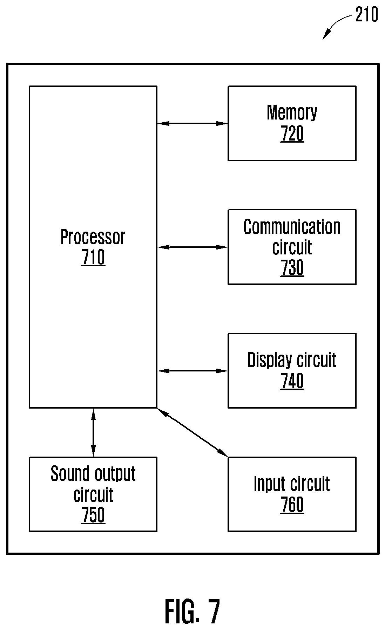

FIG. 7 is a diagram illustrating components of an electronic device according to various embodiments.

Referring to FIG. 7, the electronic device 210 may include a processor 710, a memory 720, a communication circuit 730, a display circuit 740, a sound output circuit 750, and an input circuit 760. In an embodiment, at least one (e.g., the sound output circuit 750) of these components may be omitted from the electronic device 210, or one or more other components (e.g., a sensor circuit, a haptic circuit, and a battery) may be added thereto.

The processor 710 may control at least one other component (e.g., a hardware or software component) of the electronic device 210, and may perform a variety of data processing or computation. According to an embodiment, as at least part of data processing or computation, the processor 710 may store instructions or data received from another component (e.g., the communication circuit 730) in the memory 720, process the instructions or data stored in the memory 720, and store result data in the memory 720. The processor 710 may include one or more processors, and the operations of the electronic device 210 described in the present disclosure may be performed by one processor or by a combination of multiple processors.

According to an embodiment, the processor 710 may include at least one of a main processor (e.g., a central processing unit (CPU) or an application processor (AP)) or an auxiliary processor (e.g., a graphics processing unit (GPU)), a neural processing unit (NPU), an image signal processor (ISP), a sensor hub processor, or a communication processor (CP)) that is operable independently of, or in conjunction with the main processor. The processor 710 may be implemented as an SoC or an IC configured to perform processing.

The memory 720 may store a variety of data used by at least one component (e.g., the processor 710 or the communication circuit 730) of the electronic device 210. The data may include, for example, a program (e.g., an application), and input data or output data for instructions related thereto. The memory 720 may include at least one instruction executable by the processor 710. The memory 720 may include one or more memories, and the instructions controlled by the processor 710 to perform the operations of the electronic device 210 described herein may be stored in one memory or divided and stored in multiple memories. The memory 720 may include a volatile memory or a non-volatile memory.

The communication circuit 730 may support establishing a direct (e.g., wired) communication channel or a wireless communication channel between the electronic device 210 and another electronic device (e.g., the wearable device 100, the other wearable device 220, or the server 230) and performing communication via the established communication channel. The communication circuit 730 may include a communication circuit configured to perform a communication function. The communication circuit 730 may include one or more CPs that operate independently of the processor 710 (e.g., an AP) and support direct (e.g., wired) communication or wireless communication. According to an embodiment, the communication circuit 730 may include a wireless communication circuit configured to perform wireless communication (e.g., a Bluetooth communication circuit, a cellular communication circuit, a Wi-Fi communication circuit, or a GNSS communication circuit) or a wired communication circuit (e.g., a LAN communication circuit or a power line communication (PLC) circuit). For example, the communication circuit 730 may transmit a control instruction to the wearable device 100 and receive, from the wearable device 100, at least one of sensor data including body motion information of the user who is wearing the wearable device 100, state data of the wearable device 100, or control result data corresponding to the control instruction.

The display circuit 740 may visually provide information to the outside (e.g., the user) of the electronic device 210. The display circuit 740 may include, for example, a liquid-crystal display (LCD) or organic light-emitting diode (OLED) display, a hologram device, or a projector device. The display circuit 740 may further include a control circuit configured to control the driving of a display. In an embodiment, the display circuit 740 may further include a touch sensor configured to sense a touch or a pressure sensor configured to measure the magnitude of force generated by the touch. The display circuit 740 may output a user interface screen for controlling the wearable device 100 or providing a variety of information (e.g., exercise evaluation information and setting information of the wearable device 100).

The sound output circuit 750 may output sound signals to the outside of the electronic device 210. The sound output circuit 750 may include a guide sound signal (e.g., a driving start sound or an operation error notification sound) based on a state of the wearable device 100 and a speaker for playing musical content or a guiding voice.

The input circuit 760 may receive a command or data to be used by a component (e.g., the processor 710) of the electronic device 210 from the outside (e.g., the user) of the electronic device 210. The input circuit 760 may include an input component circuit and may receive a user input. The input circuit 760 may include, for example, a touch recognition circuit for recognizing a touch on a key (e.g., a button) and/or a screen.

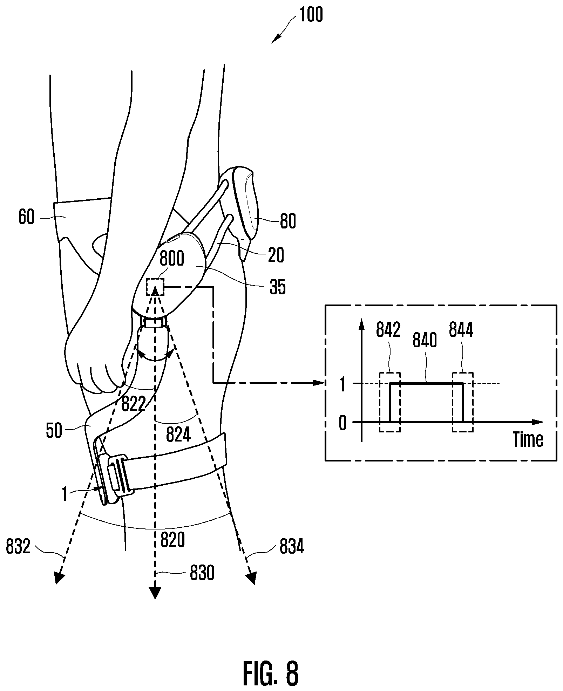

FIG. 8 is a drawing illustrating a position detection sensor according to various embodiments.

Referring to FIG. 8, a position detection sensor 800 (e.g., the position detection sensor 570 of FIG. 5) of the wearable device 100 may output a state value 840 according to the position of the second torque transmission frame 50. Another position detection sensor (not shown) configured to output a state value according to the position of the first torque transmission frame 55 may be present on the opposite side of the wearable device 100. The position detection sensor 800 may be a Hall sensor. The position detection sensor 800 may be toggled on when the angle formed by a driving axis of the second torque transmission frame 50 with respect to a reference axis 830 is within a detection area 820 and toggled off when the angle is in a non-detection area outside the detection area 820. The reference axis 830 may be, for example, a reference line when the user stands upright.

The position detection sensor 800 may output a first state value (e.g., "1") when the second torque transmission frame 50 is positioned in the detection area 820, and output a second state value (e.g., "0") when the second torque transmission frame 50 is positioned in the non-detection area. In the detection area 820, a front detection area 822 may correspond to the area between the reference axis 830 and a first detection boundary line 832, and a rear detection area 824 may correspond to the area between the reference axis 830 and a second detection boundary line 834.

For example, when the driving axis of the second torque transmission frame 50 enters the detection area 820 from the non-detection area due to a leg motion of the user, a rising edge 842 changing from "0" to "1" may appear in the state value of the position detection sensor 800. When the driving axis of the second torque transmission frame 50 enters the non-detection area from the detection area 820, a falling edge 844 changing from "1" to "0" may appear in the state value of the position detection sensor 800. In an embodiment, it may be determined whether the second torque transmission frame 50 is in the front or the rear based on the detection of the falling edge 844.

When the user extends the left leg forward while walking and the driving axis of the second torque transmission frame 50 is toward the front, the angular velocity of the second torque transmission frame 50 may have a negative value, and when the left leg moves backward and the driving axis of the second torque transmission frame 50 is toward the back, the angular velocity of the second torque transmission frame 50 may have a positive value.

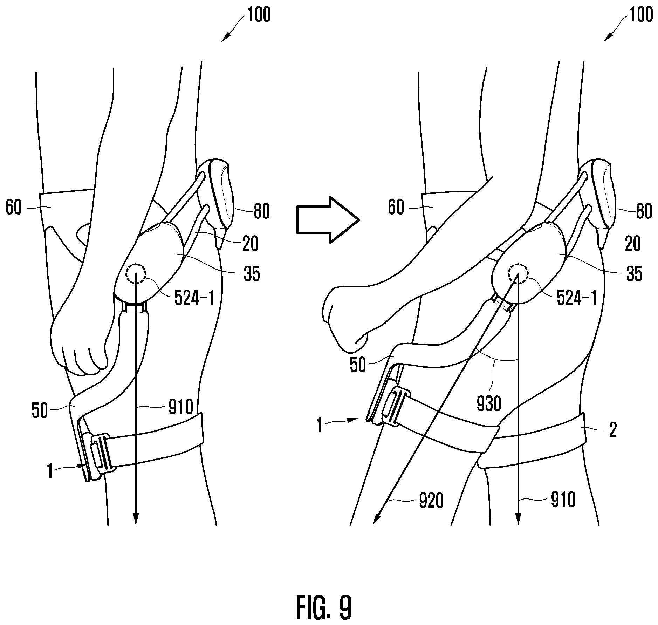

FIG. 9 is a diagram illustrating an overview of zero point setting of a wearable device according to various embodiments.

When the wearable device 100 applies an assistance force or a resistance force to a body of a user, the wearable device 100 may apply an assistance force or a resistance in the direction in which a joint of the user moves. At this time, the magnitude of force generated by the wearable device 100 or the effect of exercise of the user may vary depending on the zero point position of an angle sensor (e.g., the first angle sensor 524 or the second angle sensor 524-1) included in the wearable device 100. Additionally, the current posture or exercise posture of the user may be determined differently depending on the zero point position. The magnitude of force applied to the user or the motion assistance scheme may depend on a body motion (e.g., a joint motion) of the user measured based on the position set as the zero point. If the zero point is not set or the zero point is set to an incorrect zero point position, abnormal torque may be transmitted to the user. As described above, it is important to accurately set the zero point of the angle sensor included in the wearable device 100. In the case of the wearable device 100, it is important to quickly and accurately set the zero point position because the angle of the torque transmission frame (the hip joint angle) is used to control the driving module or determine the state (e.g., determine a walking phase).

Referring to FIG. 9, in an embodiment, the wearable device 100 may perform zero point setting on the second angle sensor 524-1 to adjust the zero position for a driving axis of the second torque transmission frame 50. The angle formed by the driving axis with a reference axis 910 (e.g., an axis perpendicular to the horizon) may vary depending on the wearing state of the wearable device 100 and/or the body shape of a user. Zero point setting may be, for example, the process of aligning the position of the driving axis with the reference axis 910. The zero point setting process may include determining a zero point offset value to offset the difference between the driving axis and the reference axis 910 to align the position of the driving axis with the reference axis 910. The value of the second angle sensor 524-1 may be compensated for based on the zero point offset value. For example, when the second angle sensor 524-1 measures the angle with respect to a direction 920 in which the driving axis of the second torque transmission frame 50 is toward, the angle of the second torque transmission frame 50 with respect to the reference axis 910 may be determined more accurately by applying (e.g., adding or subtracting) the zero point offset value to the measured angle.

According to embodiments, the zero point setting process of the wearable device 100 may be performed only by a walking motion, thereby improving the convenience of use of the user. Zero point setting may be performed automatically without a separate zero point setting operation requiring user participation. This allows the user to start exercising immediately after wearing the wearable device 100. When zero point setting is performed, zero point setting based on a walking pattern of the user and/or zero point setting based on a position detection sensor (e.g., the position detection sensor 570 of FIG. 5 or the position detection sensor 800 of FIG. 9) may be performed. When the position detection sensor of the wearable device 100 is used for zero point setting, the wearable device 100 may determine the direction of rotation of the torque transmission frame (or the motor) using the angle (or position) and the trend of change in the angle of the torque transmission frame, without using the angular velocity. This may prevent or reduce chances of the zero point from being set incorrectly as the transmission of the angular velocity of the torque transmission frame is delayed. In an embodiment, the wearable device 100 may increase the speed of zero point setting by performing zero point setting using initially collected data, and gradually increase the accuracy of zero point setting by updating the zero point position using subsequently measured data.

According to embodiments, zero point setting may be performed automatically while the user is exercising without performing a separate zero point setting process requiring user participation (e.g., performing a guide motion), and zero point setting may be performed without collecting high-quality data required for zero point setting. This may increase convenience of use and allow quick zero point setting. In addition, according to embodiments, the zero point setting process is not only performed in an early stage, but also continuously performed based on sensor data sensed by the angle sensor of the wearable device 100, and thus, zero point setting may be performed more accurately.

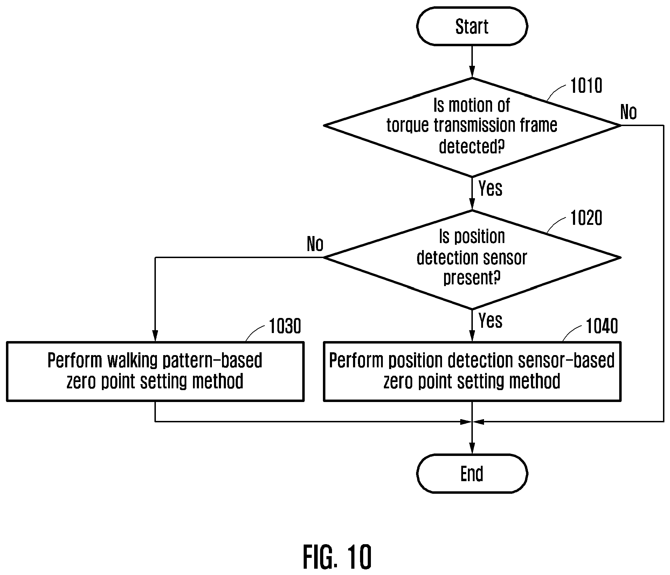

FIG. 10 is a flowchart illustrating an operation method of a wearable device with a zero point setting function according to various embodiments. In an embodiment, at least one of operations of FIG. 10 may be performed simultaneously or in parallel with another operation, and the order of the operations may be changed. In addition, at least one of the operations may be omitted, or another operation may be additionally performed.

Referring to FIG. 10, in operation 1010, a processor (e.g., the processor 512 of FIG. 5) of the wearable device 100 may determine whether a motion of a torque transmission frame (e.g., the first torque transmission frame 55 or the second torque transmission frame 50 of FIG. 3) of the wearable device 100 is detected. When a user starts walking while wearing the wearable device 100, the torque transmission frame of the wearable device 100 may move, and an angle sensor (e.g., the first angle sensor 524 or the second angle sensor 524-1 of FIG. 5) of the wearable device 100 may sense a change in the angle of the torque transmission frame. When a change in the angle or angular velocity of the torque transmission frame is detected, it may be determined that a motion of the torque transmission frame is detected.

When a motion of the torque transmission frame is detected (if "Yes" in operation 1010), a zero point setting method may be performed differently depending on whether a position detection sensor (e.g., the position detection sensor 570 of FIG. 5) configured to output a state value according to the position of the torque transmission frame is present in the wearable device 100.

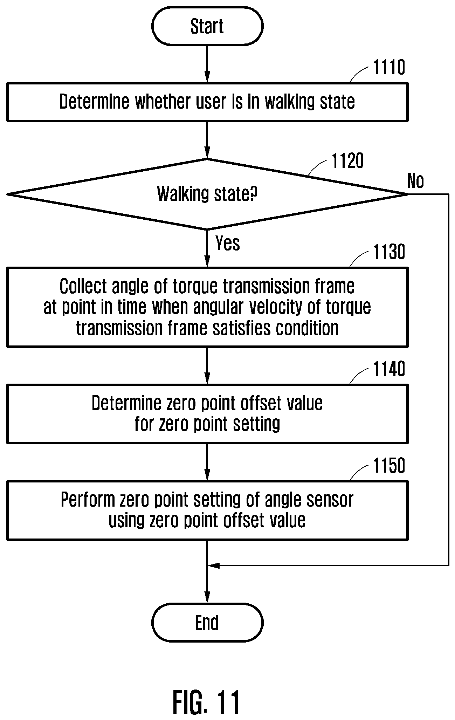

When a motion of the torque transmission frame is detected and a position detection sensor is absent (if "No" in operation 1020), the processor may perform a walking pattern-based zero point setting method of performing zero point setting of the angle sensor using the angle of the torque transmission frame measured through the angle sensor of the wearable device 100, in operation 1030. In the walking pattern-based zero point setting method, a position detection sensor may not be used. In an embodiment, an operation of performing zero point setting of the angle sensor using the angle of the torque transmission frame may include an operation of determining whether the user is in a walking state, based on the angle of the torque transmission frame measured by the angle sensor, an operation of collecting the angle of the torque transmission frame at a point in time when the angular velocity of the torque transmission frame satisfies a set condition, in response to a determination that the user is in a walking state, an operation of determining a zero point offset value for zero point setting based on the angles of the torque transmission frame collected at points in time when the condition is satisfied, and an operation of performing zero point setting of the angle sensor using the determined zero point offset value. The walking pattern-based zero point setting method is described in more detail below with reference to FIGS. 11 to 13.

When a motion of the torque transmission frame is detected and a position detection sensor configured to output a state value according to the position of the torque transmission frame is present (if "Yes" in operation 1020), the processor may perform a position detection sensor-based zero point setting method of performing zero point setting of the angle sensor using the position detection sensor, in operation 1040. In an embodiment, an operation of performing zero point setting of the angle sensor using the position detection sensor may include an operation of collecting the angle of the torque transmission frame at a point in time when a change in the state value of the position detection sensor is detected, an operation of determining whether a change in the state value of the position detection sensor is a change caused by a movement of the torque transmission frame in a first direction or a change caused by a movement of the torque transmission frame in a second direction different from the first direction, based on changes in the angles of the torque transmission frame collected in a time interval, an operation of selecting a target angle from among the collected angles of the torque transmission frame, based on a determination of the change in the state value of the position detection sensor, an operation of determining a zero point offset value for zero point setting based on the selected target angle, and an operation of performing zero point setting of the angle sensor using the determined zero point offset value.

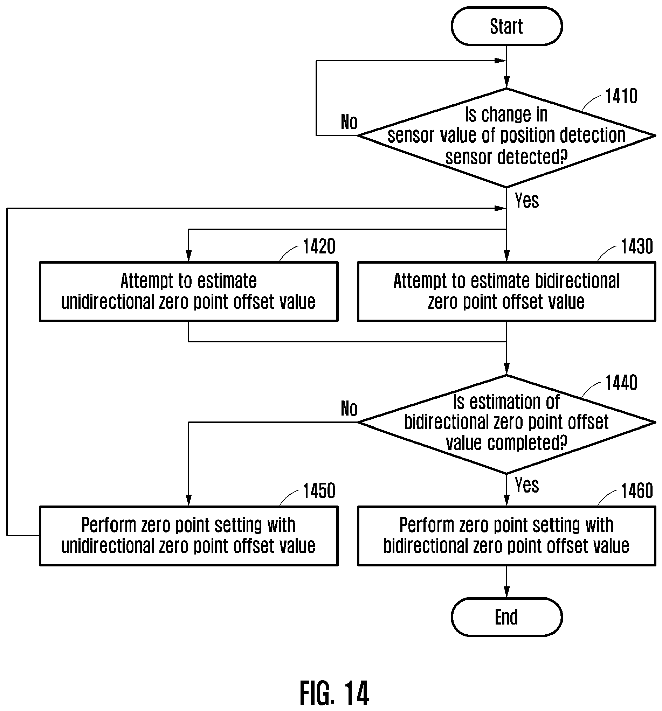

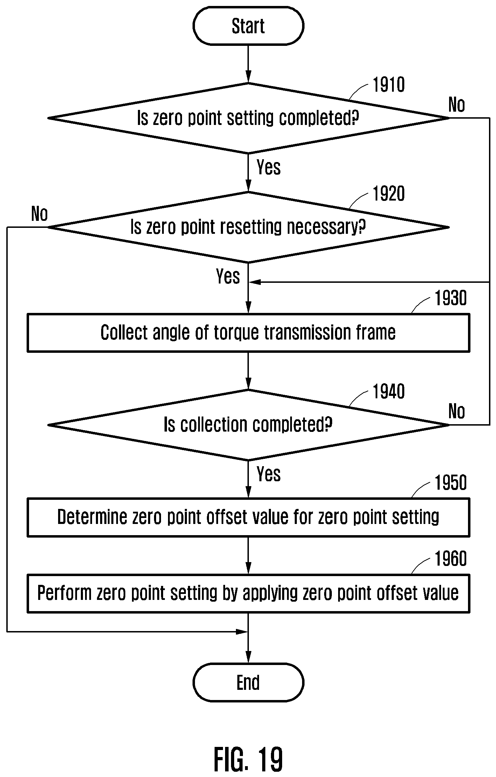

In an embodiment, the position detection sensor-based zero point setting method may include a high-speed zero point setting method using a position detection sensor and a high-accuracy zero point setting method using a position detection sensor. The high-speed zero point setting method may be performed for quick zero point setting at an early stage of the operation of the wearable device 100. The high-accuracy zero point setting method may be performed after sufficient data required for zero point setting is collected. The high-speed zero point setting method is described in more detail below with reference to FIGS. 14 to 18. The high-accuracy zero point setting method is described in more detail below with reference to FIG. 19.

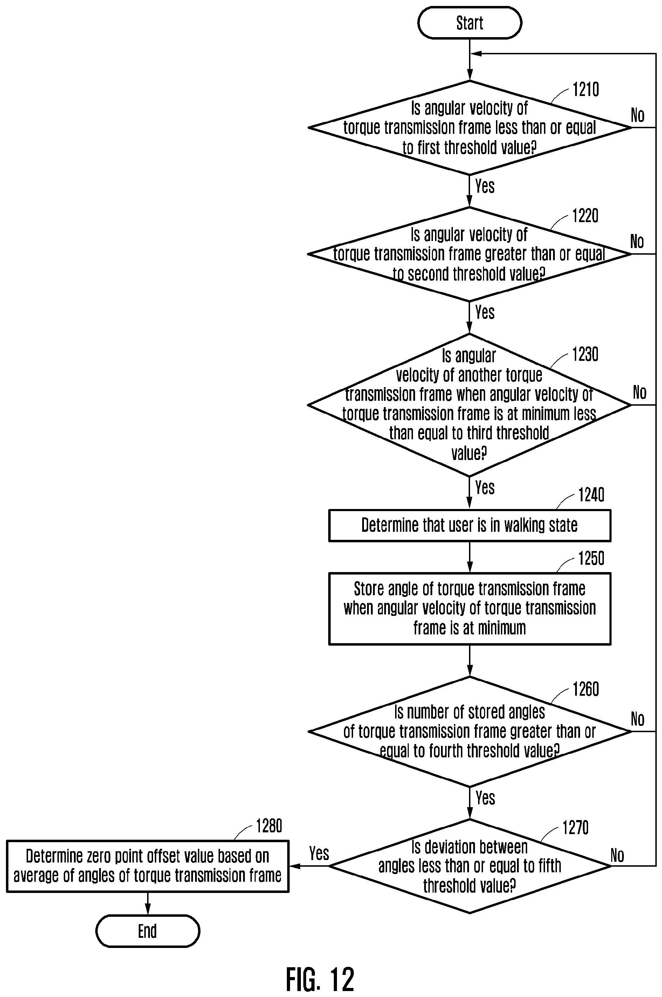

FIGS. 11 and 12 are flowcharts illustrating a walking pattern-based zero point setting method according to various embodiments. In an embodiment, at least one of operations of FIGS. 11 and 12 may be performed simultaneously or in parallel with another operation, and the order of the operations may be changed. In addition, at least one of the operations may be omitted, or another operation may be additionally performed.

Referring to FIG. 11, in operation 1110, a processor (e.g., the processor 512 of FIG. 5) of the wearable device 100 may determine whether a user is in a walking state based on the angle of a torque transmission frame measured by an angle sensor (e.g., the first angle sensor 524 or the second angle sensor 524-1 of FIG. 5) of the wearable device 100. For example, if periodic angle changes for the first torque transmission frame and the second torque transmission frame of the wearable device 100 are detected through the first angle sensor and the second angle sensor of the wearable device 100, for example, if the angle for the first torque transmission frame and the angle for the second torque transmission frame are shown as swinging alternately, it may be determined that the user is in a walking state. Determining a walking state may include determining whether the user performs valid steps. The processor may determine whether the user is performing normal walking based on the angle and angular velocity of the torque transmission frame. For example, if the angle of the second torque transmission frame (or the first torque transmission frame) when the angular velocity of the first torque transmission frame (or the second torque transmission frame) has an extreme value (or peak value) within one cycle does not satisfy a condition (e.g., if the angle of the second torque transmission frame is close to 0 degrees), it may be determined that the user is not performing normal walking. When the user walks in place, the angle of the second torque transmission frame when the angular velocity of the first torque transmission frame has an extreme value may be close to 0 degrees (the reference axis position). Since walking in place is not a normal walking state, the processor may distinguish between normal walking and walking in place, and the zero point setting process may be performed if it is determined that the user is performing normal walking.

In response to a determination that the user is in a walking state (e.g., if "Yes" in operation 1120), the processor may collect the angle of the torque transmission frame at a point in time when the angular velocity of the torque transmission frame satisfies a set condition, in operation 1130. When the angular velocity of the torque transmission frame is at a minimum or low value within one cycle, it may be determined that the angular velocity of the torque transmission frame satisfies the condition.

In operation 1140, the processor may determine a zero point offset value for zero point setting based on the angles of the torque transmission frame collected in operation 1130. The processor may collect n angles (n being a natural number greater than or equal to "2") of the torque transmission frame collected when the angular velocity of the torque transmission frame is at a minimum within one cycle, and determine the zero point offset value based on the collected n angles when a deviation between the n angles is less than or equal to a threshold value. For example, the processor may determine the zero point offset value such that a result value obtained by adding an experimentally determined constant to the average value of the collected angles of the torque transmission frame may be the zero point position.

In operation 1150, the processor may perform zero point setting of the angle sensor using the determined zero point offset value. The processor may adjust the output angle of the angle sensor by applying a zero point offset value determined during the zero point setting process to the angle measured and output by the angle sensor.

An embodiment of the walking pattern-based zero point setting method is as follows. The user may start walking while wearing the wearable device 100. When the user moves while wearing the wearable device 100, the processor may determine whether the user is in a walking state based on the angles and angular velocities of the first torque transmission frame and the second torque transmission frame obtained through the first angle sensor and the second angle sensor of the wearable device 100. The processor may determine a situation in which the user lifts and lowers the legs forward and backward through changes in the angular velocities of the first torque transmission frame and the second torque transmission frame. The processor may determine whether the user is walking in place by checking the angular velocity of one torque transmission frame at a point in time when the angular velocity of the other torque transmission frame is at a minimum. The processor may determine that the user is walking in place if one torque transmission frame rarely moves at a point in time when the angular velocity of the other torque transmission frame is at a minimum. In response to the determination that the user is walking in place, the processor may not perform the zero point setting method. If it is determined that the user is in a walking state, the processor may collect the angle of the second torque transmission frame (or the first torque transmission frame) when the angular velocity of the first torque transmission frame (or the second torque transmission frame) is at a minimum within one cycle. The processor may determine the average value of the collected angles to be a zero point candidate position when the deviation of the collected angles is less than a set reference value. The processor may determine an offset value for the difference between the zero point candidate position and the actual zero point position to be the zero point offset value, and estimate the final zero point angle by adding the determined zero point offset value to the angle measured by the angle sensor.

FIG. 12 is a flowchart illustrating in more detail the walking pattern-based zero point setting method of FIG. 11 according to an embodiment.

Referring to FIG. 12, in operation 1210, a processor (e.g., the processor 512 of FIG. 5) of the wearable device 100 may determine whether the angular velocity of a torque transmission frame (the first torque transmission frame 55 or the second torque transmission frame 50) of the wearable device 100 is less than or equal to a first threshold value. If the angular velocity of the torque transmission frame is less than or equal to the first threshold value, it may correspond to a case in which the torque transmission frame is lifted due to a leg motion of a user.

After determining that the angular velocity of the torque transmission frame is less than or equal to the first threshold value (if "Yes" in operation 1210), the processor may determine whether the angular velocity of the torque transmission frame is greater than or equal to a second threshold value, in operation 1220. When the angular velocity of the torque transmission frame is greater than or equal to the second threshold value, it may correspond to a case in which the torque transmission frame lifted due to the leg motion of the user is lowered.

After determining that the angular velocity of the torque transmission frame is greater than or equal to the second threshold value (if "Yes" in operation 1220), the processor may determine whether the angular velocity of another torque transmission frame when the angular velocity of the torque transmission frame is at a minimum within one cycle is less than or equal to a third threshold value, in operation 1230. By comparing the angular velocity of the other torque transmission frame with the third threshold value when the angular velocity of the torque transmission frame is at a minimum within one cycle, it may be determined whether the user is performing normal walking or walking in place. If the angular velocity of the other torque transmission frame when the angular velocity of the torque transmission frame is at a minimum within one cycle is greater than the third threshold value (if "No" in operation 1230), it may be determined that the user is walking in place.

If the angular velocity of the other torque transmission frame when the angular velocity of the torque transmission frame is at a minimum within one cycle is less than or equal to the third threshold value (if "Yes" in operation 1230), the processor may determine that the user is in a walking state, in operation 1240. When the torque transmission frame moving forward is changed according to a walking phase of the user, the process of operations 1210 to 1240 may be performed again based on the torque transmission frame moving forward. The process of operations 1210 to 1240 may be a process of determining whether the user is in a walking state and may correspond to operation 1110 of FIG. 11.

In operation 1250, the processor may store the angle of the torque transmission frame at a point in time when the angular velocity of the torque transmission frame satisfies a set condition. When the angular velocity of the torque transmission frame is at a minimum within one cycle, it may be determined that the angular velocity of the torque transmission frame satisfies the condition.

In operation 1260, the processor may determine whether the number of stored angles of the torque transmission frame is greater than or equal to a fourth threshold value at each point in time when the condition is satisfied. To distinguish whether walking is performed with a periodic step pattern, it may be determined whether the number of stored angles of the torque transmission frame is greater than or equal to the fourth threshold value.

In response to a determination that the number of stored angles of the torque transmission frame is greater than or equal to the fourth threshold value (if "Yes" in operation 1260), the processor may determine whether a deviation between the stored angles of the torque transmission frames is less than or equal to a fifth threshold value, in operation 1270. To distinguish whether walking is performed with a predetermined step pattern, by determining whether the deviation between the stored angles of the torque transmission frame is less than or equal to the fifth threshold value, it may be determined whether the collected angles of the torque transmission frame have similar values.

In response to a determination that the deviation between the stored angles of the torque transmission frame is less than or equal to the fifth threshold value (if "Yes" in operation 1270), the processor may determine a zero point offset value based on the average value of the stored angles of the torque transmission frame, in operation 1280. The processor may determine the final zero point angle by adding an experimentally determined constant (or offset) to the average value of the stored angles of the torque transmission frame.

Operations 1250 to 1280 may be a process of determining a zero point offset value based on a walking pattern after it is determined that the user is in a walking state and may correspond to operations 1130 to 1140 of FIG. 11.

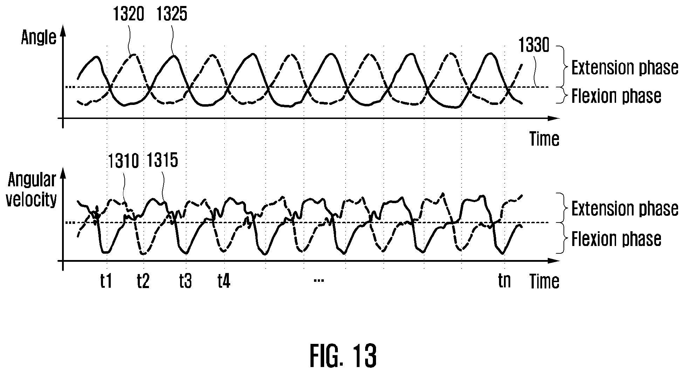

FIG. 13 is a diagram illustrating determining a zero point offset value based on a walking pattern according to various embodiments.

Referring to FIG. 13, changes in an angular velocity 1310 of a first torque transmission frame (e.g., the first torque transmission frame 55 of FIG. 5), an angular velocity 1315 of a second torque transmission frame (e.g., the second torque transmission frame 50 of FIG. 5), an angle 1320 of the first torque transmission frame, and an angle 1325 of the second torque transmission frame of the wearable device 100 over time are shown. A flexion phase may be the phase in which a user moves the legs forward (in a walking direction), and an extension phase may be the phase in which the user moves the legs backward (in the opposite direction of the walking direction).

A processor (e.g., the processor 512 of FIG. 5) of the wearable device 100 may collect the angle of another torque transmission frame each time the angular velocity of the torque transmission frame is at a minimum within one cycle, when it is determined that the user is in a walking state. For example, the angles of the first torque transmission frame and the angles of the second torque transmission frame at points in time (e.g., t1, t2, t3, t4, ..., tn) when the angular velocity 1310 of the first torque transmission frame or the angular velocity 1315 of the second torque transmission frame is at a minimum within one cycle may be collected. The processor may determine a final zero point angle 1330 by adding an experimentally determined constant to the average value of the collected angles of the first torque transmission frame and the collected angles of the second torque transmission frame (a zero point candidate position). The constant (or offset) may be a value determined based on the statistical error between a zero point candidate value obtained during the experiment and a reference value which is determined through a separate absolute encoder capable of determining a zero point angle or a zero point angle determined when the user is standing.

FIG. 14 is a flowchart illustrating a high-speed zero point setting method using a position detection sensor according to various embodiments. In an embodiment, at least one of operations of FIG. 14 may be performed simultaneously or in parallel with another operation, and the order of the operations may be changed. In addition, at least one of the operations may be omitted, or another operation may be additionally performed.

In a high-speed zero point setting method using a position detection sensor (e.g., the position detection sensor 570 of FIG. 5) of the wearable device 100, zero point setting may be performed immediately based on angles collected at an early stage when the angle of the torque transmission frame is collected at a falling edge for estimating a zero point offset value. This may maximize or improve user convenience. The precision of zero point setting may gradually improve based on the angle information of the torque transmission frame collected subsequently. Updating the zero point offset value may be attempted each time the angle information of the torque transmission frame is collected, so that the precision of zero point setting may be secured in a short period of time.

Referring to FIG. 14, in operation 1410, a processor (e.g., the processor 512 of FIG. 5) of the wearable device 100 may determine whether a change in a sensor value of a position detection sensor is detected. For example, the processor may detect whether a falling edge occurs in a state value output from the position detection sensor. The processor may detect whether a falling edge occurs in a state value output from a position detection sensor disposed on a first driving module (e.g., the first driving module 45 of FIG. 3) and/or a position detection sensor disposed on a second driving module (e.g., the second driving module 35 of FIG. 3) of the wearable device (100). Each driving module herein may comprise a motor and/or circuitry.

If a change in the sensor value of the position detection sensor is detected (if "Yes" in operation 1410), the processor may attempt to estimate a unidirectional zero point offset value, in operation 1420. The processor may attempt to estimate the unidirectional zero point offset value when only a falling edge in any one of a first direction (e.g., the walking direction or the forward direction) and a second direction (e.g., the opposite direction of the walking direction or the backward direction) is detected in the state value of the position detection sensor. In estimating the unidirectional zero point offset value, it may be distinguished whether it is the first direction or the second direction based on the trend of change in the angle of the torque transmission frame, and the zero point offset value may be estimated based on the distinguished direction. The processor may determine a torque offset value based on the angles of the torque transmission frame collected at the time of the falling edge in the detected first or second direction.

Alternatively, if a change in the sensor value of the position detection sensor is detected (if "Yes" in operation 1410), the processor may attempt to estimate a bidirectional zero point offset value, in operation 1430. If a falling edge in the first direction and a falling edge in the second direction are both detected in the state value of the position detection sensor, the processor may determine the torque offset value based on the angle of the torque transmission frame collected at the falling edge in the first direction and the angle of the torque transmission frame collected at the falling edge in the second direction. The processor may set the average value of the angle of the torque transmission frame collected at the falling edge in the first direction and the angle of the torque transmission frame collected at the falling edge in the second direction to be a determination reference value. The processor may determine that a falling edge in the second direction (e.g., the opposite direction of the walking direction or the backward direction) if the angle of the torque transmission frame is greater than the determination reference value, and may determine that a falling edge in the first direction (e.g., the walking direction or the forward direction) if the angle of the torque transmission frame is less than the determination reference value. The processor may estimate the zero point offset value based on the determination reference value.

In operation 1440, the processor may determine whether the estimation of the bidirectional zero point offset value is completed. If the estimation of the bidirectional zero point offset value is not completed (if "No" in operation 1440), the processor may perform zero point setting with the unidirectional zero point offset value, in operation 1450. If the estimation of the bidirectional zero point offset value is completed (if "Yes" in operation 1440), the processor may perform zero point setting with the bidirectional zero point offset value, in operation 1460. If zero point setting has previously been performed with a unidirectional zero point offset value, the processor may update the existing unidirectional zero point offset value with the bidirectional zero point offset value.

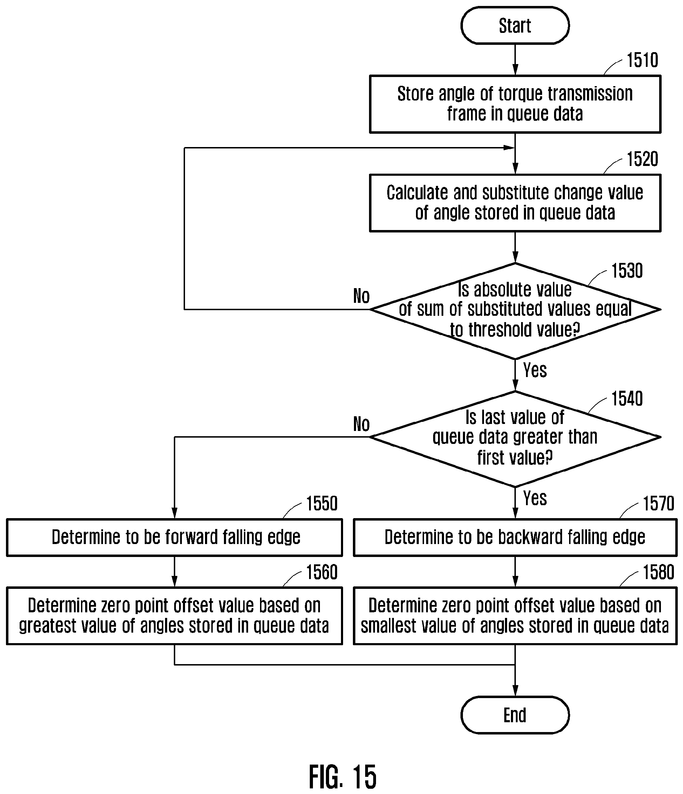

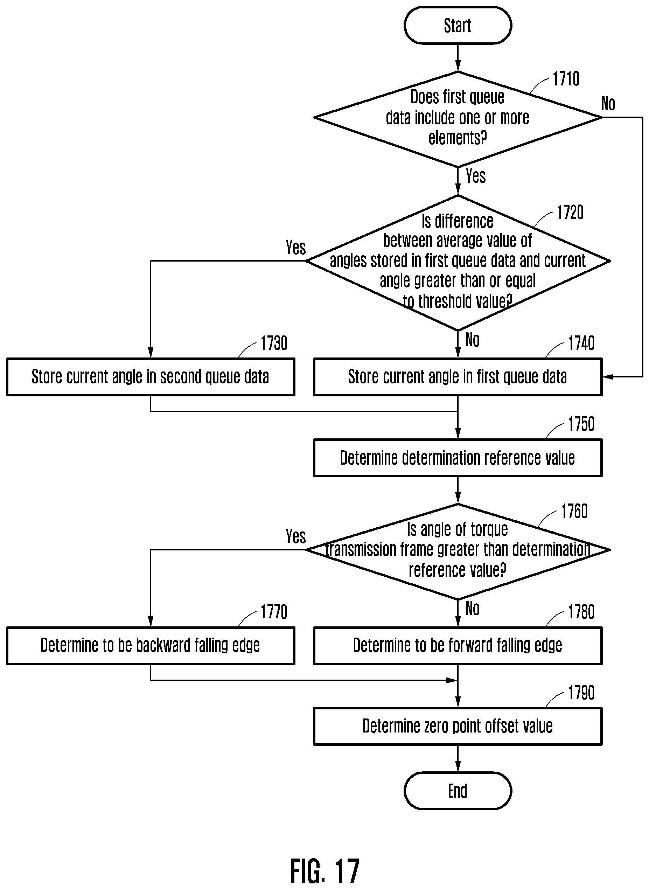

In the high-speed zero point setting method described above, zero point setting may be performed immediately using the angle data initially collected after the user starts walking, without waiting for sufficient angle data to be collected, and the zero point may be updated more precisely later. Quick zero point setting may be performed using the unidirectional zero point offset value, and when a bidirectional zero point offset value is determined, zero point setting may be performed based on the bidirectional zero point offset value. Since the bidirectional zero point offset value is more precise than the unidirectional zero point offset value, the bidirectional zero point offset value may be applied prior to the unidirectional zero point offset value. A method of determining a unidirectional zero point offset value is described in more detail below with reference to FIG. 15, and a method of determining a bidirectional zero point offset value is described in more detail below with reference to FIG. 17.

An embodiment of the position detection sensor-based zero point setting method is as follows.

The user may start walking while wearing the wearable device 100. When the user moves while wearing the wearable device 100, a state value output from the position detection sensor of the wearable device 100 may change. When a torque transmission frame goes through the boundary between a detection area and a non-detection area of the position detection sensor even once, the estimation of the unidirectional zero point offset value may be completed, and initial zero point setting may be completed immediately based on the unidirectional zero point offset value. Thereafter, the angle of the torque transmission frame may be collected each time the torque transmission frame goes through the boundary between the detection area and the non-detection area, and the bidirectional zero point offset value may be estimated based on the collected angle of the torque transmission frame. A more precise zero point setting process may be performed based on the estimated bidirectional zero point offset value. The bidirectional zero point offset value may be continuously updated each time the torque transmission frame goes through the boundary between the detection area and the non-detection area.

FIG. 15 is a flowchart illustrating a method of performing zero point setting with a unidirectional zero point offset value according to various embodiments. In an embodiment, at least one of operations of FIG. 15 may be performed simultaneously or in parallel with another operation, and the order of the operations may be changed. In addition, at least one of the operations may be omitted, or another operation may be additionally performed.

Referring to FIG. 15, in operation 1510, a processor (e.g., the processor 512 of FIG. 5) of the wearable device 100 may collect the angle of a torque transmission frame (e.g., the first torque transmission frame 55 or the second torque transmission frame 50 of FIG. 3) of the wearable device 100 and store the collected angle of the torque transmission frame in queue data. For example, the processor may collect the angle of the torque transmission frame periodically (e.g., every 10 milliseconds (ms)) and sequentially store the collected angles of the torque transmission frame in the queue data. If the number of angles of the torque transmission frame to be stored in the queue data is greater than or equal to the number of angles that can be stored in the queue data, the processor may delete the angle at the front of the queue data (corresponding to the angle stored first in the queue data) and store the most recently collected angle at the end of the queue data.

In operation 1520, the processor may calculate a change value (or variation) of the angle value stored in the queue data and substitute the change value. For example, after change values of the angle values stored in the queue data are calculated, change values greater than "0" may be substituted with the value of "1", and change values less than "0" may be substituted with the value of "-1". Thereafter, the processor may sum all the substituted values.

In operation 1530, the processor may determine whether the absolute value of the sum of all the substituted values is equal to a threshold value. Here, the threshold value may be the number of angles that can be stored in the queue data.

If the absolute value of the sum of all the substituted values is equal to the threshold value (if "Yes" in operation 1530), the processor may determine whether the last value of the queue data is greater than the first value of the queue data, in operation 1540.

If the last value of the queue data is not greater than the first value of the queue data (if "No" in operation 1540), the processor may determine that a falling edge appearing in the state value of the position detection sensor (e.g., the position detection sensor 570 of FIG. 5) of the wearable device 100 is a forward falling edge, in operation 1550. The forward falling edge may be a falling edge appearing in the state of the position detection sensor when the torque transmission frame goes through the boundary between the detection area and the non-detection area of the position detection sensor due to a leg motion in a walking direction.

In operation 1560, the processor may determine the zero point offset value based on the greatest value of the angles stored in the queue data. Here, the angles of the torque transmission frame collected at points in time at which falling edges appear in the state value of the position detection sensor may be stored in the queue data. If it is determined that the change in the state value of the position detection sensor is due to a movement of the torque transmission frame in the forward direction, the processor may select the greatest value of the angles of the torque transmission frame collected at the points in time of the falling edges in the queue data as a target angle, and determine a result value obtained by adding a reference angle (e.g., 12 degrees) corresponding to the forward direction to the selected target angle to be the zero point offset value.

If the last value of the queue data is greater than the first value of the queue data (if "Yes" in operation 1540), the processor may determine that the falling edge appearing in the state value of the position detection sensor of the wearable device 100 is a backward falling edge, in operation 1570. The backward falling edge may be a falling edge appearing in the state of the position detection sensor when the torque transmission frame goes through the boundary between the detection area and the non-detection area of the position detection sensor due to a leg motion in the opposite direction of the walking direction.

In operation 1580, the processor may determine the zero point offset value based on the smallest value of the angles stored in the queue data. Here, the angles of the torque transmission frame collected at points in time at which falling edges appear in the state value of the position detection sensor may be stored in the queue data. If it is determined that the change in the state value of the position detection sensor is due to a movement of the torque transmission frame in the backward direction, the processor may select the smallest value of the angles of the torque transmission frame collected at the points in time of the falling edges in the queue data as a target angle, and determine a result value obtained by subtracting the reference angle (e.g., 12 degrees) corresponding to the forward direction from the selected target angle to be the zero point offset value.

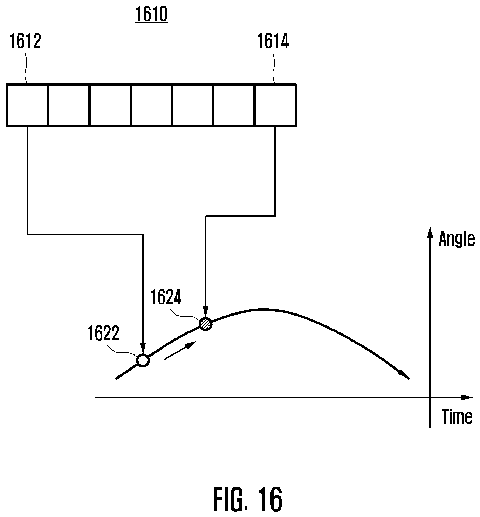

FIG. 16 is a diagram illustrating determining the direction of a falling edge based on queue data according to various embodiments.

Referring to FIG. 16, collected angles of a torque transmission frame of the wearable device 100 may be stored in queue data 1610. A limited number of elements (e.g., angles of the torque transmission frame) may be stored in the queue data 1610, and the angles of the torque transmission frame may be sequentially stored in the queue data 1610 according to the FIFO method. It is assumed that an angle 1622 is stored at the front 1612 of the queue data 1610 and an angle 1624 is stored at the end 1614 of the queue data 1610. Angles of the torque transmission frame collected in the meanwhile may be stored between the front 1611 and the end 1614.

When a falling edge is detected only in the forward direction or the backward direction, the direction in which the falling edge occurs may be estimated based on the changes in the angles stored in the queue data 1610. A processor (e.g., the processor 512 of FIG. 5) of the wearable device 100 may compare the angle of the torque transmission frame from a predetermined time ago (e.g., the angle 1622) and the most recently collected angle of the torque transmission frame (e.g., the angle 1624), and estimate the direction in which the falling edge occurs and the direction of the torque transmission frame (corresponding to the direction of rotation of a motor) according to the comparison result. For example, if the angle of the torque transmission frame from the predetermined time ago (e.g., the angle 1622) is less than the most recently collected angle of the torque transmission frame (e.g., the angle 1624), the angle of the torque transmission frame seems to increase over time, and thus, the direction in which the falling edge occurs and the direction of the torque transmission frame may be identified as the backward direction. Conversely, if the angle of the torque transmission frame from the predetermined time ago is greater than the most recently collected angle of the torque transmission frame, the angle of the torque transmission frame seems to decrease over time, and thus, the direction in which the falling edge occurs and the direction of the torque transmission frame may be identified as the forward direction. By estimating the direction in which the falling edge occurs based on the changes in the angles stored in the queue data 1610, the direction in which the falling edge occurs may be estimated more accurately.

FIG. 17 is a flowchart illustrating a method of performing zero point setting with a bidirectional zero point offset value according to various embodiments. In an embodiment, at least one of operations of FIG. 17 may be performed simultaneously or in parallel with another operation, and the order of the operations may be changed. In addition, at least one of the operations may be omitted, or another operation may be additionally performed.

Referring to FIG. 17, in operation 1710, a processor (e.g., the processor 512 of FIG. 5) of the wearable device 100 may determine whether first queue data includes one or more elements. The first queue data may store the angles of a torque transmission frame when falling edges appear in the state value of a position detection sensor (e.g., the position detection sensor 570 of FIG. 5) of the wearable device 100 (at points in time of falling edges).

If it is determined that the first queue data includes one or more elements (if "Yes" in operation 1710), the processor may determine whether the difference between the average value of the angles of the torque transmission frame stored in the first queue data and the current angle of the torque transmission frame is greater than or equal to a threshold value (e.g., 12 degrees), in operation 1720. The current angle of the torque transmission frame may correspond to the angle of the torque transmission frame collected at the most recent falling edge appearing in the state value of the position detection sensor.

If it is determined that the difference between the average value of the angles of the torque transmission frame stored in the first queue data and the current angle of the torque transmission frame is greater than or equal to the threshold value (if "Yes" in operation 1720), the processor may store the current angle of the torque transmission frame in second queue data different from the first queue data, in operation 1730.

If it is determined that the first queue data does not include one or more elements (if "No" in operation 1710) or if it is determined that the difference between the average value of the angles of the torque transmission frame stored in the first queue data and the current angle of the torque transmission frame is not greater than or equal to the threshold value (if "No" in operation 1720), the processor may store the current angle of the torque transmission frame in the first queue data, in operation 1740.

The processor may collect the angle of the torque transmission frame at each point in time of a falling edge of the position detection sensor, and store the collected angle in the first queue data or the second queue data according to the process of operations 1710 to 1740 described above. The angles of the torque transmission frame stored in the first queue data and the angles of the torque transmission frame stored in the second queue data may correspond to angles collected in different directions (e.g., the forward direction and the backward direction).

In operation 1750, the processor may determine a determination reference value based on the angles of the torque transmission frame stored in the first queue data and the second queue data. In an embodiment, if falling edges of the position detection sensor are detected in both directions (e.g., the forward direction and the backward direction) and the angles of the torque transmission frame at points in time of bidirectional falling edges are collected, the processor may use the average value of the collected angles of the torque transmission frame as the determination reference value. The processor may, for example, add a first average value of the angles of the torque transmission frame included in the first queue data and a second average value of the angles of the torque transmission frame included in the second queue data, and determine a value obtained by dividing the result value of the addition by "2" as the determination reference value.

In operation 1760, the processor may determine whether the angle of the torque transmission frame is greater than the determination reference value. The processor may determine the direction of a falling edge appearing in the state of the position detection sensor using the determination reference value.

If it is determined that the angle of the torque transmission frame is greater than the determination reference value (if "Yes" in operation 1760), the processor may determine that the falling edge appearing when collecting the angle of the torque transmission frame is a backward falling edge, in operation 1770.

If it is determined that the angle of the torque transmission frame is not greater than the determination reference value (if "No" in operation 1760), the processor may determine that the falling edge appearing when collecting the angle of the torque transmission frame is a forward falling edge, in operation 1780.

In operation 1790, the processor may determine a zero point offset value. In an embodiment, the processor may identify queue data having a larger value between the first average value of the angles of the torque transmission frame stored in the first queue data and the second average value of the angle of the torque transmission frame stored in the second queue data as one storing the angles of the torque transmission frame collected at the points in time of backward falling edges. The queue data having a smaller value between the first average value and the second average value may be identified as one storing the angles of the torque transmission frame collected at the points in time of forward falling edges. In an embodiment, the greatest value of the angles of the torque transmission frame collected at the points in time of forward falling edges and the smallest value of the angles of the torque transmission frame collected at the points in time of backward fall edges may be selected, and the average value of the greatest value and the smallest value may be determined to be the zero point offset value.

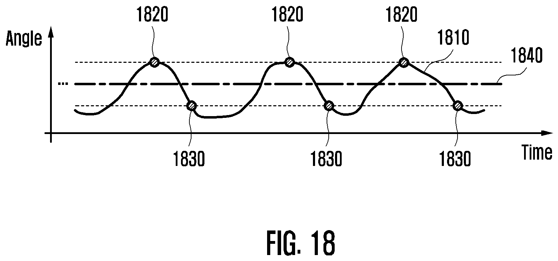

FIG. 18 is a diagram illustrating determining a zero point offset value based on a determination reference value according to various embodiments.

Referring to FIG. 18, a graph 1810 shows a change in the angle of one torque transmission frame over time, measured by an angle sensor (e.g., the first angle sensor 524 or the second angle sensor 524-1 of FIG. 5) of the wearable device 100. The angle of the torque transmission frame may change within a finite range while a user is walking, and the direction (the direction of rotation) of the torque transmission frame may be identified by analyzing the trend of the angle (e.g., whether the angle continuously increases or decreases within one cycle). An interval in which the angle increases may correspond to an interval in which the torque transmission frame moves backward, and an interval in which the angle decreases may correspond to an interval in which the torque transmission frame moves forward.

In the graph 1810, angles 1820 and 1830 at predetermined points in time may be the angles of the torque transmission frame measured at the respective points in time at which falling edges appear in the state value of a position detection sensor (e.g., the position detection sensor 570 of FIG. 5). The angles 1820 correspond to the angles of the torque transmission frame when falling edges are detected in the state value of the position detection sensor in the intervals in which the torque transmission frame moves backward. The angles 1830 correspond to the angles of the torque transmission frame when falling edges are detected in the state value of the position detection sensor in the intervals in which the torque transmission frame moves forward. In an embodiment, a processor (e.g., the processor 512 of FIG. 5) of the wearable device 100 may determine the average value of the angles 1820 of the torque transmission frame collected at the forward falling edges and the angles 1830 of the torque transmission frame collected at backward falling edges to be a determination reference value 1840. After the determination reference value 1840 is determined, whether it is the forward direction or the backward direction may be identified using the determination reference value 1840. If the angle of the torque transmission frame is greater than the determination reference value 1840, it may be identified as the forward direction, and if the angle of the torque transmission frame is less than the determination reference value 1840, it may be identified as the backward direction. In an embodiment, the determination reference value 1840 may be used as the zero point position.

FIG. 19 is a flowchart illustrating a high-accuracy zero point setting method using a position detection sensor according to various embodiments. In an embodiment, at least one of operations of FIG. 19 may be performed simultaneously or in parallel with another operation, and the order of the operations may be changed. In addition, at least one of the operations may be omitted, or another operation may be additionally performed.

Referring to FIG. 19, in operation 1910, a processor (e.g., the processor 512 of FIG. 5) of the wearable device 100 may determine whether zero point setting for an angle sensor (e.g., the first angle sensor 524 or the second angle sensor 524-1 of FIG. 5) of the wearable device 100 is completed. For example, the processor may determine whether zero point setting is completed according to the zero point setting method described above in FIG. 15 or FIG. 17.

If it is determined that zero point setting is completed (if "Yes" in operation 1910), the processor may determine whether zero point resetting is necessary, in operation 1920. The wearable device 100 may determine whether zero point resetting is necessary based on a change in the state of the wearable device 100. The change in the state of the wearable device 100 may include, for example, a change in at least one of a connection state between the wearable device 100 and a peripheral device, a power state of the wearable device 100, an operation state of the wearable device 100, and the state of a driving module of the wearable device 100. In addition, the wearable device 100 may determine whether zero point resetting is necessary based on whether an error occurs in the wearable device 100. Even if zero point setting has already been completed, the wearable device 100 may perform the zero point setting process if it is determined that zero point resetting is necessary based on a change in the state of the wearable device 100. If it is determined that zero point resetting is unnecessary (if "No" in operation 1920), the current zero point setting state may be maintained without a separate zero point setting process.

If zero point setting is not completed (if "No" in operation 1910) or if it is determined that zero point resetting is necessary (if "Yes" in operation 1920), the processor may collect the angle of the torque transmission frame when a falling edge appears in the state value of the position detection sensor (e.g., the position detection sensor 570 of FIG. 5) (at a point in time of a falling edge), in operation 1930. For example, when the angular velocity of the torque transmission frame is within ±10 to 60 degrees per second and the moving direction of the angular velocity of the torque transmission frame are the same as the direction of the angle of the torque transmission frame, the processor may collect the angle of the torque transmission frame at a point in time of a falling edge.

In operation 1940, the processor may determine whether the collection of the angle of the torque transmission frame is completed. The processor may continuously collect the angles of the torque transmission frame until a sufficiently large number of angles of the torque transmission frame is collected, to increase the accuracy of zero point setting.

If it is determined that the collection of the angles of the torque transmission frame is completed (if "Yes" in operation 1940), the processor may determine a zero point offset value for zero point setting, in operation 1950. When a user walks while wearing the wearable device 100, the relative angle difference between a forward angle change value of the torque transmission frame and a backward angle change value of the torque transmission frame based on a reference position of the position detection sensor may be automatically calculated, and the zero point position for zero point setting may be determined based on the calculated relative angle difference.

In operation 1960, the processor may perform zero point setting of an angle sensor (e.g., the first angle sensor 524 or the second angle sensor 524-1 of FIG. 5) using the determined zero point offset value. The processor may adjust the output angle of the angle sensor by applying a zero point offset value determined during the zero point setting process to the angle measured and output by the angle sensor.

Each embodiment herein may be used in combination with any other embodiment(s) described herein.

"Based on" as used herein covers based at least on.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., wiredly), wirelessly, or via at least a third component(s).

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC). Accordingly, each "module" herein may include a circuit.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums. Embodiments as set forth herein may be implemented as software including one or more instructions that are stored in a storage medium that is readable by a machine. For example, a processor of the machine may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Although the present disclosure exemplifies and describes with reference to various embodiments, it shall be construed that various embodiments are for the illustrative purpose rather than limiting. It shall be further understood by those skilled in the art that various changes in forms and details may be made without departing from the true spirit and full scope of this disclosure including the scope of the attached claims and their equivalents. In addition, it shall be construed that the embodiments described herein may be used with other embodiments of the present disclosure.

## Claims

1. A wearable device (100) with a zero point setting function, the wearable device comprising:
a driving module (530; 530-1), comprising a motor and/or circuitry, configured to generate torque to be applied to a body of a user;
a torque transmission frame (50; 55) configured to transmit the generated torque to a leg of the user;
a thigh fastening portion (1; 2) connected to the torque transmission frame (50; 55) and configured to fasten the torque transmission frame (50; 55) to the leg of the user;
an angle sensor (524; 524-1) configured to measure an angle of the torque transmission frame (50; 55); and
one or more processors (512), comprising processing circuitry, configured to perform zero point setting of the angle sensor (524; 524-1) based on the measured angle of the torque transmission frame (50; 55),
wherein the one or more processors (512) are configured to:
determine whether the user is in a walking state, based on the angle of the torque transmission frame (50; 55) measured by the angle sensor,
collect the angle of the torque transmission frame (50; 55) at a point in time when an angular velocity of the torque transmission frame (50; 55) satisfies a set condition, in response to a determination that the user is in a walking state,
determine a zero point offset value for zero point setting based on angles of the torque transmission frame (50; 55) collected at points in time when the condition is satisfied, and
perform zero point setting of the angle sensor (524; 524-1) using the determined zero point offset value.

2. The wearable device of claim 1, wherein
the torque transmission frame (50; 55) comprises a first torque transmission frame (55) and a second torque transmission frame (50) configured to transmit torque to different legs of the user, and
the one or more processors (512) are configured to determine whether the user is in a walking state, based on an angular velocity of the first torque transmission frame (55) and an angular velocity of the second torque transmission frame (50).

3. The wearable device of claim 2, wherein the one or more processors (512) are configured to:
determine whether the angular velocity of the first torque transmission frame (55) is less than or equal to a first threshold value,
determine whether the angular velocity of the first torque transmission frame (55) is greater than or equal to a second threshold value, after determining that the angular velocity of the first torque transmission frame (55) is less than or equal to the first threshold value, and
determine that the user is in a walking state, if the angular velocity of the second torque transmission frame (50) when the angular velocity of the first torque transmission frame (55) is at a minimum within one cycle is less than or equal to a third threshold value, after determining that the angular velocity of the first torque transmission frame (55) is greater than or equal to the second threshold value.

4. The wearable device of any one of claims 1 to 3, wherein the one or more processors (512) are configured to determine that the angular velocity of the torque transmission frame (50; 55) satisfies the condition when the angular velocity of the torque transmission frame (50; 55) is at a minimum or low value within one cycle.

5. The wearable device of any one of claims 1 to 4, wherein the one or more processors (512) are configured to:
determine whether the number of angles of the torque transmission frame (50; 55) collected at points in time when the condition is satisfied is greater than or equal to a fourth threshold value,
determine whether a deviation between the collected angles of the torque transmission frame (50; 55) is less than or equal to a fifth threshold value, in response to a determination that the number of collected angles of the torque transmission frame (50; 55) is greater than or equal to the fourth threshold value, and
determine the zero point offset value based on the collected angles of the torque transmission frame (50; 55), in response to a determination that the deviation is less than or equal to the fifth threshold value.

6. The wearable device of claim 5, wherein the one or more processors (512) are configured to determine the zero point offset value based on an average value of the collected angles of the torque transmission frame (50; 55).

7. The wearable device of any one of claims 1 to 6, wherein the one or more processors (512) are configured to automatically perform zero point setting based on an angle of the torque transmission frame (50; 55) collected while performing an exercise program of the wearable device (100), without performing user guiding for zero point setting.

8. A wearable device (100) with a zero point setting function, the wearable device comprising:
a driving module (530; 530-1), comprising a motor and/or circuitry, configured to generate torque to be applied to a body of a user;
a torque transmission frame (50; 55) configured to transmit the generated torque to a leg of the user;
a thigh fastening portion (1; 2) connected to the torque transmission frame (50; 55) and configured to fasten the torque transmission frame (50; 55) to the leg of the user;
an angle sensor (524; 524-1) configured to measure an angle of the torque transmission frame (50; 55);
a position detection sensor (570) configured to output a state value based on a position of the torque transmission frame (55; 50); and
one or more processors (512), comprising processing circuitry, configured to perform zero point setting of the angle sensor (524; 524-1) based on the measured angle of the torque transmission frame (50; 55),
wherein the one or more processors (512) are configured to:
collect angles of the torque transmission frame (50; 55),
determine whether a change in the state value of the position detection sensor (570) is a change caused by a movement of the torque transmission frame (50; 55) in a first direction or a change caused by a movement of the torque transmission frame (50; 55) in a second direction different from the first direction, based on changes in the collected angles of the torque transmission frame (50; 55),
select a target angle from among the collected angles of the torque transmission frame (50; 55), based on a determination of the change in the state value of the position detection sensor (570),
determine a zero point offset value for zero point setting based on the selected target angle, and
perform zero point setting of the angle sensor (524; 524-1) using the determined zero point offset value.

9. The wearable device of claim 8, wherein the one or more processors (512) are configured to:
sequentially store angles of the torque transmission frame (50; 55) in queue data, and
determine whether the change in the state value of the position detection sensor (570) is a change caused by the movement in the first direction or a change caused by the movement in the second direction, based on changes in the angles stored in the queue data.

10. The wearable device of claim 8 or 9, wherein the position detection sensor (570) is configured to:
output a first state value when the torque transmission frame (50; 55) is positioned in a detection area, and
output a second state value different from the first state value when the torque transmission frame (50; 55) is positioned in a non-detection area,
wherein the one or more processors (512) are configured to:
collect an angle of the torque transmission frame (50; 55) at a point in time when a change in the output value of the position detection sensor (570) from the first state value to the second state value is detected.

11. The wearable device of any one of claims 8 to 10, wherein the one or more processors (512) are configured to:
select a greatest value of the collected angles of the torque transmission frame (50; 55) as the target angle, in response to a determination that the change in the state value of the position detection sensor (570) is a change caused by the movement in the first direction, and
determine a result value obtained by applying a reference angle corresponding to the first direction to the target angle to be the zero point offset value.

12. The wearable device of any one of claims 8 to 11, wherein the one or more processors (512) are configured to:
select a smallest value of the collected angles of the torque transmission frame (50; 55) as the target angle, in response to a determination that the change in the state value of the position detection sensor (570) is a change caused by the movement in the second direction, and
determine a result value obtained at least by applying a reference angle corresponding to the second direction to the target angle to be the zero point offset value.

13. The wearable device of claim 8, wherein the one or more processors (512) are configured to:
control the angle of the torque transmission frame (50; 55) to be stored in queue data corresponding to the first direction or queue data corresponding to the second direction,
determine a determination reference value based on the queue data corresponding to the first direction and the queue data corresponding to the second direction,
determine whether the change in the state value of the position detection sensor (570) is a change caused by the movement in the first direction or a change caused by the movement in the second direction, based on the determination reference value,
select a greatest value of angles included in the queue data corresponding to the first direction as a first target angle,
select a smallest value of angles included in the queue data corresponding to the second direction as a second target angle, and
determine the zero point offset value based on the first target angle and the second target angle.

14. The wearable device of any one of claims 8 to 13, wherein the one or more processors (512) are configured to automatically perform zero point setting based on an angle of the torque transmission frame (50; 55) collected while performing an exercise program of the wearable device (100), without performing user guiding for zero point setting.

15. An operation method of a wearable device (100) comprising a driving module (530; 530-1) configured to generate torque to be applied to a body of a user, a torque transmission frame (50; 55) configured to transmit the generated torque to a leg of the user, and an angle sensor (524; 524-1) configured to measure an angle of the torque transmission frame (50; 55), the operation method comprising:
determining whether a movement of the torque transmission frame (50; 55) is detected;
performing zero point setting of the angle sensor (524; 524-1) using at least a position detection sensor (570), when a movement of the torque transmission frame (50; 55) is detected and the position detection sensor (570) configured to output a state value according to a position of the torque transmission frame (55; 50) is present; and
performing zero point setting of the angle sensor (524; 524-1) using at least an angle of the torque transmission frame (50; 55) measured by the angle sensor (524; 524-1), when a movement of the torque transmission frame (50; 55) is detected and the position detection sensor (570) is absent.
